# EUROPEAN PATENT APPLICATION

(11) **EP 4 606 561 A1**
(43) Date of publication of application: **27.08.2025**
(21) Application number: 24159686.5
(22) Date of filing: 26.02.2024
(51) Int. Cl.: B29D 35/00, B29D 35/12

(54) **SHOE SOLE MANUFACTURE BY GAS COUNTER PRESSURE INJECTION MOLDING**

(71) Applicant: DESMA Schuhmaschinen GmbH, 28832 Achim (DE)
(72) Inventor: Decker, Christian, 28844 Weyhe (DE); Strauß, Adrian, 27374 Visselhövede (DE)
(74) Representative: Hertin und Partner Rechts- und Patentanwälte PartG mbB

(57) **Abstract**

The invention relates to a system for manufacturing a shoe, a shoe sole or part thereof, comprising a foamed material, by direct injection. The system comprises a mold and an upper closing element, thereby forming a molding unit, configured to form a cavity in the shape of a shoe sole or part thereof. The system further comprises a pressurized container positioned above or around the molding unit to create a pressurized space around said molding unit. The invention additionally relates to a direct injection method for manufacturing a shoe, a shoe sole or part thereof comprising a foamed material.

## Description

The invention is in the field of manufacturing shoes or shoe soles comprising a foamed material using direct injection.

The invention relates to a system for manufacturing a shoe, a shoe sole or part thereof, comprising a foamed material, by direct injection. The system comprises a mold and an upper closing element, thereby forming a molding unit, configured to form a cavity in the shape of a shoe sole or part thereof. The system further comprises a pressurized container positioned above or around the molding unit to create a pressurized space around said molding unit. In embodiments, the pressurized container is configured to withstand a first internal pressure of at least 5 bar.

The invention further relates to a direct injection method for manufacturing a shoe, a shoe sole or part thereof comprising a foamed material. The method comprises the steps of providing a mold and an upper closing element, thereby forming a molding unit, configured to form a cavity in the shape of a shoe sole or part thereof, creating a pressurized space around said molding unit by positioning a pressurized container above or around the molding unit or positioning the molding unit inside the pressurized container, supplying a gas to the pressurized space to reach a first internal pressure of at least 5 bar, preferably at least 10 bar, more preferably at least 75 bar, and injecting a foamable material into the cavity at a second pressure by means of an injection molding unit, wherein the second pressure is greater than the first internal pressure.

### BACKGROUND OF THE INVENTION

Injection molding is a technology commonly used for high-volume manufacturing of items made of thermoplastic or foam material, most commonly thermoplastic polymers. During a typical injection molding process, a molding material, for example a polyurethane foam, is forcefully injected into a mold cavity formed by an injection molding form having a particular cavity shape. The injected molding material is held in the mold cavity, cooled, and then removed as a solidified part having a shape that essentially duplicates the cavity shape of the mold. Injection molding can be used for the manufacture of shoe soles or parts thereof.

Injection molded shoe soles can be produced efficiently and exhibit a high quality as well as comfort for the wearer. In order to produce the desired comfort, the shoe sole often encompasses foam of certain properties, preferably comprising a quantity of air contained within the foamed material of the sole in order to increase the damping effect of the sole. Air contained within the sole further reduces its weight, therefore reducing any detrimental influence of the shoe on the user's gait and dexterity. Additionally, comfortable soles require a degree of elasticity, flexibility and durability.

Shoe soles additionally tend to be visible, creating high demand for a uniform finish with a good aesthetic quality. As shoe soles are configured for contact with the exterior atmosphere, a smooth surface quality is also desirable for ease of cleaning and to avoid permanent discoloration. Additionally, shoe soles are subject to a high degree of wear, which increases their risk of separation from the remainder of a shoe. This is especially critical for sports shoes. A strong bond between the shoe upper and the sole is thus desirable.

Known devices and techniques for manufacturing such soles suffer from various problems which lead to inadequate quality in the soles. Amongst these, excessive density and high weight is a notable issue. The distribution of bubble sizes and total bubble volume (or void fraction) across a foam-based product during its injection molding is known to have an impact on its final density *(*Moon, Yongrak & Cha, Sung & Seo, Jung-hwan. (2008). Bubble Nucleation and Growth in Microcellular Injection Molding Processes. Polymer-Plastics Technology and Engineering*).* Generally, smaller bubbles and thin bubble walls have been found to lead to a lower density in the final product.

The number and size of bubbles produced in an injection molded product can be manipulated by the addition of particulate nucleating agents such as talc, clay powders and other particulate filler materials. These can trigger the formation of bubbles at their interfaces with a polymer melt, when said polymer melt includes a dissolved blowing agent. However, they have been found to reduce the elasticity and flexibility of the produced items, such that exclusive reliance on such nucleating agents for the reduction of the density of a shoe sole is undesirable.

US5866053A discloses a technique for producing fine bubbles ("microcells") in an injection molded product. A supercritical fluid (e.g. CO₂ or N₂) is fed to a polymer melt such as to dissolve therein and to form a single-phase mixture. The single-phase mixture is injected into a mold, where it is subjected to a rapid pressure drop. This rapid pressure drop induces bubble formation, due to the separation of the supercritical fluid from the mixture and expansion of the supercritical fluid. Bubble expansion is eventually stopped by the cooling of the mixture. This forms tightly packed bubbles of small diameter (2 - 10 µm) which allows the production of lightweight parts. However, items molded using this technique have also been found to suffer from a poor surface quality, making this technique unsuitable for visible parts of the shoe, such as shoe soles.

A quality defect which arises from the technique of US5866053A is the production of so-called "silver marks" on surfaces. These are unsightly marks showing the direction of flow of the injection molded mixture just before cooling and are thought to be caused by gas bubbles being sheared and trapped between the mixture and a relatively cool inner wall of the mold. These marks additionally increase the roughness of the surface of the produced part, making cleaning of the part more difficult. This is a further obstacle to the use of microcell foaming in producing lightweight shoe soles.

There is thus a need for a method of manufacturing a shoe sole which unites the qualities of low shoe sole density with a smooth and aesthetically consistent surface texture.

WO2021249819A1 discloses an attempt to adapt and improve the technique of US5866053A to form injection-molded shoe soles with improved properties. The injection-molded shoe soles are separately formed using a polyurethane composition and then attached to a shoe upper. The injection molding method of WO2021249819A1 seeks to improve the uniformity of the foams and to provide low cell diameters in order to improve the rebound properties of a shoe sole. The method involves melting the polyurethane composition and loading the same with a supercritical fluid before injecting it into an adapted mold. The mold is provided with a large number of venting holes which can be opened to allow rapid release of the built-up gas pressure. This construction allows the mold to withstand internal pressures up to around 10 bar.

An elevated gas pressure is first provided in the mold to prevent the expansion and foaming of the melted composition during its injection. The gas pressure is then rapidly reduced by releasing excess gas only after the melted composition has been injected, such that bubbles are nucleated and formed at the same time throughout the composition, improving their uniformity. The produced foam has average void sizes of around 500 µm (see Table 1). The application of the microcell injection molding technique is thus challenging, as even using the improved procedure, relatively large cell sizes are provided. Furthermore, the soles produced must be adhered to a shoe upper using additional materials such as adhesives which can introduce additional optical errors and areas of weakness in the shoe. There is thus a need for an injection molding system and method which allows the production of a sole having a uniform material, a much lower average cell diameter and a high mechanical strength. An improved bond between the sole and the shoe upper is also required.

Processes for manufacturing shoes in which the sole is attached to the upper by directly bonding between a cured injection molding material and the shoe upper are referred to as "direct soling". The direct soling of shoes has become a popular method for increasing the speed of manufacture of shoes and for ensuring a good, adhesive-free bond between the shoe sole and a shoe upper. Direct soling differs in particular to a common alternative method for manufacturing shoes, which is based upon providing the shoe sole as a (prefabricated) separate component, which is subsequently glued to the shoe upper. Compared to attachment by gluing, direct soling has a number of advantages. Most importantly, the quality and durability of the bonding is substantially increased. While for glued shoe soles a partial or complete detachment can be observed at increased strains, such deleterious effects are negligible for directly soled shoe soles. Furthermore, using direct soling, a continuous optical integration of the sole with the upper is achieved satisfying high aesthetic standards.

EP3835046A1 discloses a method of direct soling a multi-layered shoe sole. The method includes the injection molding of a first layer of the sole (e.g. a midsole) using a mold having a floor element and cooperating side elements which delimit a cavity from the sides and from below. The upper region of the cavity is closed by shoe last, the shoe last carrying the shoe upper. The sole-shaped cavity is thus created and sealed by joining the different elements in a substantially airtight manner.

While this technique can improve the bonding between shoe sole and shoe upper, the temperature and pressure conditions within the cavity are limited by the material limitations of the different mold elements and their fit. Currently there are no known means to apply the counterpressure technique of WO2021249819A1 to a molding unit according to EP3835046A1, in particular due to challenges in sealing the mold cavity such that it can withstand inner pressures of several bar. This is partly due to the presence of the shoe upper at an interface between the mold and the shoe last. These limitations in turn reduce the choice of materials which can be effectively foamed and molded using this technique. EP3835046A1 discloses use of the technique to manufacture a sole from polyurethane as a foamable material, wherein one or more additives are selected from a group comprising a color additive, a hardener, a softener, a crosslinker, gasing agent, a propellant, a cell opener or a stabilizer.

The composition of the shoe soles and their substantially permanent bond to the shoe upper present additional challenges in the sustainable sourcing and recycling of the shoe. In view of increasing regulation, more sustainable alternatives to the traditionally used materials are required.

There is thus a need for a method and system for manufacturing shoe soles having an excellent bond to a shoe upper, a low density, high flexibility and elasticity as well as a good surface quality and low roughness. There is additionally a need for a method and system for manufacturing such shoe soles in a safe and sustainable manner whilst providing performance.

### SUMMARY OF THE INVENTION

One objective of the present invention was to overcome the disadvantages of the prior art.

A further object of the present invention was the provision of a method and system for manufacturing shoe soles with a higher quality, whilst allowing said shoe soles to be directly applied to a shoe upper in an adhesive-free manner.

A further object of the present invention was the provision of a method and system for manufacturing shoe soles with a low density, high flexibility and elasticity, and a consistent and smooth surface quality.

A further object of the present invention was the provision of a method and system for manufacturing shoe soles with a uniform and small cell diameter, the cell diameter preferably being much lower than that achieved by the prior art.

A further object of the present invention was the provision of a method and system for manufacturing shoe soles with higher quality, whilst still benefiting from the speed and automation of a direct soling procedure.

It was yet a further object of the present invention to provide a method and system of manufacturing shoe soles with minimal environmental impact.

The problem is solved by the features of the independent claims. Preferred embodiments of the present invention are provided by the dependent claims.

The invention therefore relates to a system for manufacturing a shoe, a shoe sole or part thereof comprising a foamed material by direct injection. The system comprises a mold and an upper closing element, thereby forming a molding unit, configured to form a cavity in the shape of a shoe sole or part thereof. The system further comprises a pressurized container positioned above or around the molding unit to create a pressurized space around said molding unit. In embodiments, the pressurized container is configured to withstand a first internal pressure of at least 5 bar.

The provision of a molding unit comprising a mold and an upper closing element allows for the direct soling of injection-molded soles to a shoe upper carried on the upper closing element, which is preferably a shoe last. An adhesive-free bond between the sole and the shoe upper can thus be provided. This arrangement also advantageously allows the layer-wise or part-wise build-up of the shoe sole, which may comprise different materials and optionally cavities within the shoe sole. This is in particular due to the fact that the shoe upper held by the upper closing element may be in any intermediate stage in its manufacture, before a further layer of foamed material is injected into the molding unit and thereby attached to the shoe upper. This provides advantages in terms of the bonding stability between the sole and the shoe upper or between different portions of the sole as well as an improved aesthetic finish.

The provision of a pressurized container positioned above or around all or part of the molding unit to create a pressurized space around the molding unit raises or substantially removes the limitation on the maximum fluid pressure which the molding unit can safely withstand without risk of leaks, breakage or separation of the different elements that form the molding unit. In contrast to the molding unit, the pressurized container need not be so structured as to be easily opened or dismantled for removing the molded sole. Instead, the pressurized container may be optimized in its form, materials and structure such as to safely withstand high fluid pressures. Such a pressurized container may, for example, be constructed according to the known construction principles of a pressurized vessel. The pressurized container in particular resolves the issue of limited sealing between the shoe upper on the upper closing element and the remainder of the molding unit. This is due to the shoe upper often being formed of porous or uneven materials which do not form optimal seals.

The system according to the invention allows the pressurization of the molding unit and the pressurized space before the injection of a foamable material into the cavity of the molding unit. This allows for a high pressure to be maintained around the molding unit, preventing it from leaking. At the same time, a high pressure may be provided within the molding unit before and during injection of the foamable material. The foamable material thus need not be subjected to a rapid pressure drop, as is the case with the traditional microcell injection molding techniques of US5866053A and WO2021249819A1. Instead, the pressure differential between the foamable material being injected and the interior of the mold may be adjusted in such a manner that the foamable material is subjected to a gradually reduced pressure in the molding unit. This has surprisingly been found not only to form a large number of small bubbles in the foamed material but also to allow any distorted bubbles at the boundary between the foamed material and the inner walls of the molding unit to be reabsorbed into the foamed material. This is due to the high solubility of blowing agents in polymer melts at elevated pressures. The silver marks of the prior art could thus be reduced or eliminated.

Furthermore, the system according to the invention could be made to withstand internal pressures greater than 10 bar, greater than 20 bar, greater than 50 bar, greater than 75 bar, greater than 100 bar or more. In embodiments, the pressurized space may exhibit more than atmospheric pressure, preferably above 5, 10, 15, 20, 25, 30, 35, 40, 45, 50, 55, 60, 65, 70, 75, 80, 85, 90, 95, 100 or more bar in pressure. This increases the effectiveness of the counterpressure procedure and allows the production of foams with very small cell diameters of the order of a few µm. The higher internal pressures additionally allowed for a longer and more controlled pressure drop curve.

As the foamed material may remain at a relatively high pressure during its injection into the mold cavity, its loading with a blowing agent and/or supercritical fluid may remain high before gas is released from the mold cavity. This means that the blowing agent may begin to nucleate such that the foamable material substantially expands after the injection process is complete and the flow of foamable material to the cavity is shut-off. This advantageously eliminates the presence of witness marks in the finished sole as the foam expands within a fully closed cavity having substantially continuous inner walls.

A further advantage of the inventive system is that the lowered pressure difference between the foamable material being injected into the molding unit and the interior of the molding unit can increase the viscosity of the foamable material, thus slowing its flow. The reduced pressure difference also slows the formation of bubbles at the flow front during injection of the foamable material. This further contributes to the formation of a continuous but relatively thin skin at the exterior of the sole and a smooth surface texture. The surface roughness of soles formed using the inventive system was found to be significantly lower than the surface roughness of soles formed according to the techniques of the prior art.

The slowed or delayed formation of bubbles in the foamable material also led to smaller and rounder cells as well as an improved adherence of the foamed material to the shoe upper. This provided improved tensile strength and improved impact strength in the finished shoe sole. Shoe soles produced using the inventive system also had excellent flexibility and elasticity in combination with the low density and high strength. The system thus surprisingly allows for improved quality of shoe soles, which continue to benefit from the advantages of direct soling.

The term "shoe" as used herein preferably refers to all forms of shoe which have a sole, in particular a mid-sole comprising a foamed material, including but not limited to, dress shoes, boots, sneakers, clogs, sandals, slip on sandals and shoes, sport shoes, golf shoes, tennis shoes, running shoes, athletic shoes, hiking shoes, ski boots, cycling shoes, soccer boots, and the like. The shoe sole shall encompass different kinds of soles but is characterized by comprising at least one foamed material in at least one portion thereof.

In the sense of the invention, a "shoe sole" is preferably a portion of a shoe which is positioned substantially below a wearer's foot when the shoe is in use. The shoe sole preferably comprises a portion or layer configured for contact with the ground (outsole or outer sole). While shoe soles may be formed using any material such as wood, metal, rubber or fabric, the present invention is in particular concerned with shoe soles which comprise a foamed material in at least one portion thereof, preferably positioned between the outsole and the shoe upper. This portion of the shoe sole, comprising a foamed material, is typically referred to as the midsole. Optionally, the shoe sole may comprise other components such as football studs, decorative foils, lights, or the like.

As used herein the term "direct soling" preferably refers to an injection process that forms at least one layer or portion of the shoe sole and said layer or portion is bonded to an upper or a previously formed layer of a shoe sole. To this end, for instance, a foamable duroplastic, thermoplastic or elastomeric synthetic material may be used, which is preferably polymerizable, such that during a physical or chemical reaction of such materials the molding material (mixture) may form a shoe sole layer that is directly bonded to the upper or a previous layer. A direct soling process is distinct from processes involving the formation of a layer of a shoe sole and its subsequent attachment to an upper or a previous shoe layer by gluing.

In the sense of the invention, a "foamed material" is preferably a solid material comprising dispersed gas bubbles which are partially (as in an open cell foam) or fully separated (as in a closed cell foam) by films of solidified material. The foamed material is preferably a closed cell foam. The foamed material in particular has a void fraction α of at least 0.2, preferably at least 0.4, more preferably at least 0.5, wherein the void fraction is preferably the fraction of void volume to the total volume of the material (α = V_{void}/Vₜₒₜₐₗ).

In embodiments, the solid foamed material is formed from a fluid foamable material comprising a molten polymer or precursors thereof and a dissolved blowing agent. Where polymers are used to form the foamed material, these may be thermoplastic or thermosetting polymers, wherein thermoplastic polymers are preferred and thermoplastic elastomers are especially preferred.

In the sense of the invention, a "mold" is preferably an apparatus having inner walls, the inner walls being configured to determine or influence the shape, contour and/or texture of a solid article formed by solidification of a non-solid material. The mold may comprise multiple components which contribute to an overall form and allow the mold to be easily dismantled to release the solid article. The mold is preferably open on an upper side, such as to fit an upper closing element.

In the sense of the invention, a "molding unit" is preferably the term given to the parts which serve to enclose the cavity in the shape of a shoe sole or part thereof. The molding unit includes the mold and upper closing element. The molding unit may also be referred to as a "molding package".

In the sense of the invention, an "upper closing element" is preferably a device or element formed such as to reversibly close an upper opening of the mold, in particular when a shoe upper is attached to the upper closing element. Preferably, the upper closing element is a shoe last configured to hold one or more shoe uppers. When the shoe last carrying the shoe upper is used to close an upper opening of the mold, a portion of the shoe upper preferably forms an upper boundary of the cavity in the shape of a shoe sole or part thereof. The cavity is thus preferably closed from all sides by the mold, shoe upper and upper closing element.

As used herein the term "cavity" or "molding cavity" takes the ordinary meaning in the art and refers to a space in which the molded article, e.g. the layer of the shoe sole or part thereof, is formed.

In the sense of the invention, a "pressurized container" is preferably a component of the inventive system which is configured to safely contain a gas at an elevated pressure, said elevated pressure preferably exceeding atmospheric pressure, more preferably exceeding 5 bar. The pressurized container is preferably sealable, such as to withstand the pressure of a gas therein without leaks. The pressurized container is preferably configured to enclose the upper closing element comprising the shoe upper and may provide additional volume above said upper closing element, the additional volume being able to hold pressurized gas. The pressurized container may in some embodiments be reversibly fixable to upper or outer walls of the mold such as to create a pressurized space above the mold and around the shoe last. Such a pressurized container is preferably referred to herein as a "ceiling element" In some preferred embodiments of the invention, the pressurized container fully surrounds and contains one or more molding units, being configured for example as a pressure vessel.

In embodiments, the pressurized container and/or pressurized space are configured to enable foamed or foamable material to be positioned in the mold at high pressure, for example at pressures as disclosed herein, and avoid or prevent leakage of the material from the mold, especially when the upper closing element is a shoe upper on a shoe last.

In the sense of the invention, a "pressurized space" is preferably a volume in the system which is configured to withstand elevated gas pressures in its interior, said elevated gas pressures preferably exceeding 5 bar. The pressurized space includes a volume outside and inside of the cavity of the molding unit.

In the sense of the invention, an "internal pressure" is preferably a gas pressure acting on inner walls of one or more system components. Pressure values provided herein are preferably bar gauge values, unless indicated otherwise. The internal pressure is preferably a relative pressure, unless indicated otherwise.

In the sense of the invention, an "external pressure" is preferably a gas pressure acting on outer walls of one or more system components.

In a preferred embodiment of the invention, the system of the invention additionally comprises a pressurizing unit configured for supplying a fluid, in particular a gas, to the pressurized space to obtain said first internal pressure. The pressurizing unit may comprise one or more fluid canisters or other fluid storage vessels and one or more pumps for pumping gas into the pressurized space. Additionally, or alternatively, the pressurizing unit may comprise an autoclave.

The term "fluid" as used herein preferably refers to flowable materials, in particular in a liquid or gaseous state. Supercritical fluids are however also included in the term "fluid", even if they cannot be characterized distinctly as liquids or gases.

The system can thus safely apply a high internal pressure within the molding unit, which may be produced to an achievable air-tight standard. The difficulty in providing an entirely airtight space in a molding unit comprising multiple parts, such as to allow the molding unit to be opened and closed, is overcome by provision of the pressurized container. In particular the use of a shoe last as an upper closing element to allow direct soling limits the sealing which can be achieved by the molding unit. Pressurized fluid, in particular gas, exiting the molding unit is safely held by the pressurized container in a manner that prevents unwanted leakage or safety hazards emanating from the molding unit. A rapid pressure drop upon injection of a foamable material into the cavity of the molding unit is thus avoided. This allows the foamable material to be injected using a "gas counterpressure" procedure, allowing the above-mentioned quality improvements to be achieved.

In a further preferred embodiment of the invention, the system comprises an injection molding unit configured for injecting a foamable material at a second pressure into the cavity, wherein the second pressure is greater than the first pressure. The pressure differential between the foamable material and the mold cavity thus drives the foamable material into the mold cavity and causes a nucleation of gas bubbles therein. This is due to the reduced solubility of gases in a molten material at lower pressures. This process is however controlled by the reduced pressure difference between the foamable material and the gas inside the mold.

The foamable material at the second pressure is preferably loaded with a blowing fluid, in particular a supercritical fluid and/or a blowing agent. Additionally, such a fluid may aid in adjusting the second pressure at which the foamable material is injected.

An "injection molding unit" in the sense of the invention preferably describes equipment for introducing a polymer melt, preferably comprising a dissolved blowing agent, into a mold cavity. The equipment may comprise any suitable components known from the prior art for this purpose. For example, the skilled person may refer to the disclosure of DE102015108086A1 which describes and illustrates components of an injection molding unit. Preferably, the injection molding unit comprises means for introducing solid polymer material or precursors thereof, for example using a hopper or filament feed. The injection molding unit preferably also comprises means for melting said polymer material, e.g. a heating coil or heat exchanger provided on the walls of a channel. The injection molding unit preferably comprises means for introducing a blowing agent, preferably a supercritical inert fluid, into the polymer melt, such as to dissolve the blowing agent therein. For example, a fluid, in particular a gas may be fed into the flowing polymer melt via a side inlet. A mixture comprising both the polymer melt and the dissolved fluid may be moved towards an injection inlet of the molding unit by means of an extruder, in particular a screw extruder.

In a further preferred embodiment of the invention, the mold comprises at least two lateral mold frames. Such lateral mold frames may be configured to define the form and/or texture of lateral, front and/or rear surfaces of the shoe sole or part thereof. The lateral mold frames may optionally also extend across the lower surface of the shoe sole or part thereof, e.g. with each lateral mold frame having a lower portion covering half of the lower surface of the shoe sole or the part thereof. By providing the mold as a set of at least two mold frames, release of the solidified sole from the mold is made easier, in particular for sole designs having a convex, concave, rounded or stylized lateral surface. Limiting the mold components to the two lateral mold frames, which between them preferably cover the lower surface of the sole, can accelerate the closing, sealing and/or unsealing and opening of the mold. This advantageously reduces the cycle time of the injection molding process.

Preferably, the mold additionally comprises a lower closing element. Such a lower closing element is preferably a lower mold frame for defining the form and/or texture of a lower surface of the shoe sole. The lower closing element is preferably configured to form a mold with a continuous inner surface when arranged between the lateral mold frames. This further aids the release of the solidified sole or portion thereof, in particular for complex designs.

In a further preferred embodiment of the invention, the pressurized container comprises a ceiling element above the molding unit, the ceiling element being attachable to the mold. Such a ceiling element may extend over the whole upper closing element, in particular including the shoe last and a shoe upper carried thereon, and may compensate for any sealing limitations between the upper closing element and the mold. Thus, the ceiling element can define a pressurized space comprising the cavity of the mold and any volume in the ceiling element surrounding the upper closing element. The attachment of the ceiling element to the mold can be achieved using much more heavy-duty and pressure-resistant means compared to the attachment of the upper closing element to the mold, in particular due to the absence of the product itself (the shoe) at the point of attachment. The ceiling element thus allows the mold to withstand significantly higher internal pressures than could otherwise be achieved or considered safe. A particular advantage of using such a ceiling element connected to the mold is that the pressurized space may be limited in its volume, needing only to cover the region surrounding the upper closing element. This saves time as the pressurized space may be filled more quickly with gas. It additionally reduces the energy requirements of each cycle of the process, making it especially economic.

In a preferred embodiment of the invention, the ceiling element has a form adapted to the form of the upper closing element, when this carries a shoe upper. Such a ceiling element may be produced by machining from a metallic block. As such, a tight fit may be achieved between the ceiling element and the upper closing element, improving the sealing of the mold cavity and preventing leakages of foamable material at the boundary between the mold and the shoe upper. At the same time, the pressurized volume is minimized.

In a preferred embodiment of the invention, the ceiling element has a domed form, the form preferably being substantially free of angled joints. This advantageously increases the pressure resistance of the pressurized container and can adequately cover the upper closing element including a shoe upper. The lack of angled joints advantageously eliminates lines of weakness in the ceiling element. In case the ceiling element comprises multiple sheets, in particular of metal, it is advantageous that these be welded together to further maximize the pressure resistance of the ceiling element.

In a preferred embodiment of the invention, the ceiling element, later mold frame(s) and/or the upper closing element is provided with a sealing element for improving the sealing between the upper closing element or shoe upper and the mold. Such a sealing element may comprise a resilient impermeable material such as rubber or silicone.

In a further preferred embodiment of the invention, the pressurized container, in particular the ceiling element, comprises means for fixing the position of the upper closing element between the pressurized container and the mold. In particular, the pressurized container comprises a socket or clamp for receiving an upper portion of upper closing element on an interior wall of the pressurized container. This aids in positioning the components of the system during the set-up and end of an injection molding process. At the same time, a robust seal is provided between the upper closing element and the mold, which can be fixed in relative position. This prevents unwanted leaks which can lead to quality defects.

In a further preferred embodiment of the invention, the mold and the ceiling element comprise interlocking components, the interlocking components preferably being selected from the group comprising a lowering yoke, pawl and locking element. Said interlocking components may also be used to connect different frames of the mold to one another. Such interlocking components have been found to provide a robust connection between components which preserves the precise relative positioning of components to one another. The interlocking components can withstand high internal and external pressures whilst being easily and rapidly insertable and/or removable such as to open and close the ceiling element and/or the mold. This is especially advantageous for providing a short cycle time in a continuous manufacturing process.

In a further preferred embodiment of the invention, two or more components of the molding unit are provided with a clamp. The clamp preferably maintains a seal between the components and prevents their separation during the pressurization of the cavity. In particular, the upper closing element may be clamped to the mold, in order to fix its position with respect to the mold during the manufacturing process.

In a further preferred embodiment of the invention, the pressurized container is configured to create a pressurized space around one or more, preferably two or more, preferably three or more, or more preferably four or more molding units. This reduces process time required for the set-up of the molding units and the pressurized container, in particular the locking and sealing of different components with one another. A larger single pressurized container can also be dimensioned and formed to withstand especially high internal pressures. Such a set-up is especially advantageous for a linear, rather than a circular process flow. This embodiment is preferable over the use of the ceiling element.

In a further preferred embodiment of the invention, the system further comprises at least one foamable material inlet channel passing through the pressurized container and into the cavity of each molding unit in the pressurized container. Preferably the at least one foamable material inlet channel is a single, continuous channel connecting the mold cavity with a sealable port on outer surface of the pressurized container. To this end, the foamable material inlet channel may pass through the walls of the pressurized container and the molding unit. The foamable material inlet channel is preferably configured to withstand the first internal pressure and the second pressure at which the foamable material is injected.

Preferably the at least one foamable material inlet channel is fluidly connectable to an injection molding unit. Preferably, the fluid connected between the injection molding unit and the at least one foamable material inlet channel or between the injection molding unit and the cavity can be sealed shut, wherein the sealing is preferably configured to withstand the first internal pressure and the second pressure. This prevents unwanted fluid escape from the pressurized container and an unwanted pressure loss. Additionally, damage to the injection molding unit is avoided.

In a further preferred embodiment of the invention, the at least one foamable material inlet channel is provided with a valve for controlling the flow of foamable material from an injection molding unit to the cavity. The valve preferably not only opens and closes the foamable material inlet channel but also controls the amount of flow, e.g. in terms of volumetric flow rate, mass flow rate, flow velocity or pressure drop. In this manner, a control unit may remotely initiate, control and end an injection molding cycle occurring within the pressurized container.

In a further preferred embodiment of the invention, a robot is provided for opening the pressurized container between injection molding cycles, inserting molding packets into the pressurized container and closing the pressurized container. Molding packets (or molding units) inserted into the pressurized container are preferably positions or fitted such as to form a continuous foamable material inlet channel between each mold cavity and the port on the outside of the pressurized container. To this end, the interior of the pressurized container may comprise sockets and/or locking elements for precise and stable positioning of the molding packets.

In a further preferred embodiment of the invention, the pressurized container and/or the molding unit comprises means for positioning the upper closing element onto the mold, wherein the upper closing element is preferably a shoe last for carrying a shoe upper, preferably such as to withstand the first internal pressure and the second pressure without displacement of the upper closing element with respect to the mold. The means for positioning the upper closing element may include any means known in the art such as clamps, locking elements, sockets, screw connections, snap-fit connections and the like.

In a preferred embodiment of the invention, the system comprises two, three, four or more molding units transportable via a conveyor system, wherein preferably a control unit is configured for sequentially positioning each of the molding units to connect to a stationary injection molding unit. It may be preferred for multiple molding units to be simultaneously connected to the injection molding unit or for this to occur one at a time. It was surprisingly found that a conveyor belt could be used to supply the molding units to the injection molding unit in such a manner that sufficiently high clamping forces could be guaranteed during injection.

In a preferred embodiment of the invention, the conveyor system is linear. Preferably, the linear conveyor system supplies molding units from a magazine, in which they are preferably provided in a production sequence, to a position on a table. Preferably, a robot picks the next molding unit from an end of an input conveyor of the conveyor system or from the table and connects the molding unit to the injection molding unit. The same or a further robot may then close a pressurized container around the molding unit. Pressure is then preferably built up within the pressurized container, foamable material is injected into the cavity within the molding unit, the pressure within the pressurized container is released and the pressurized container is preferably opened. The molding unit is then preferably repositioned on an output conveyor of the conveyor system.

While it is possible for each molding unit to be provided with a dedicated pressurized container such as a ceiling element, it is preferred that a single pressurized container is used to house various molding units. These molding units may be fixed within the pressurized container in turn or several at a time.

Preferably, the pressurized container comprises multiple injection points corresponding to the multiple molding units to be held therein. These injection points preferably traverse a wall of the pressurized container and are connected via a channel to an inlet of the mold cavity, such as to connect each mold cavity with an injection molding unit. The injection points are preferably each provided with a sealing element, in particular an O-ring, which preferably ensures an airtight fit between an inlet channel or nozzle and the walls of the pressurized space. Despite central control of the internal pressure build-up in the pressurized container, the flow of foamable material may be supplied and preferably controlled individually for each molding unit. This can ensure that for each sole or part thereof to be manufactured, the advancing flow front entering the mold follows a predetermined velocity and pressure profile. Each sole manufactured using this technique may thus have the required quality characteristics.

In a further preferred embodiment of the invention, the pressurized container comprises a cylindrical form, preferably with one or more domed ends. The cylindrical form preferably rests on a circular face, with the molding units preferably being arranged within said circular face. It is preferred that the molding units are held in place within the pressurized container by a socket and/or clamp. The diameter of the pressurized container is preferably selected to correspond to the number of molding units multiplied by a maximum dimension of each molding unit in the horizontal plane. Preferably, the diameter of the pressurized container comprises at least 400 mm, more preferably at least 500 mm, for each molding unit to be held therein. For example, a pressurized container configured to hold four molding units preferably has a diameter of at least 1600 mm, more preferably at least 2000 mm.

In a further preferred embodiment of the invention, the diameter of the pressurized container is not greater than 1200 mm, more preferably not greater than 1000 mm, even more preferably not greater than 800 mm. Such a pressurized container can be provided with an excellent seal due to its limited perimeter and can thus withstand very high internal pressures. It may be preferred that the pressurized container be used to hold a single molding unit, said single molding unit preferably comprising one or two cavities for one or two soles.

In a further preferred embodiment of the invention, the pressurized container and mold are configured to withstand a first internal pressure of at least 10 bar, more preferably at least 20 bar, more preferably at least 40 bar, more preferably at least 60 bar, still more preferably at least 75 bar. This allows for a significant gas counterpressure to be provided within the molding unit before and during injection of the foamable material. This has surprisingly allowed the flow of the foamable material and the formation of bubbles to be slowed down such as to provide a uniform, low density without or with fewer unwanted silver marks.

In a further preferred embodiment of the invention, the molding unit is provided with a heater, preferably in the form of one or more heating cartridges. This allows the temperature of the molding unit and the foaming material injected into it to be controlled. A raised temperature at the beginning of an injection molding cycle is advantageous for slowing down the cooling of the foamable material, such as to allow sufficient time for the complete formation of cells and the expansion of the foamed material to fill the cavity.

In a further preferred embodiment of the invention, the molding unit is provided with a cooler. This may accelerate the solidification of the foamed material after sufficient foaming, such as to reduce the cycle time of the process and to aid the release of the sole or part thereof from the mold.

In a further preferred embodiment of the invention, the system comprises at least one fluid inlet channel (or "gas inlet channel") configured for provision of pressurized fluid, in particular pressurized gas to the pressurized space. Such a fluid inlet channel is preferably fluidly connected to the pressurizing unit. The fluid inlet channel is preferably provided with a sealing element, in particular an O-ring. A valve is preferably provided for controlling the fluid input.

In a further preferred embodiment of the invention, the system further comprises at least one fluid outlet channel, also known as a "gas outlet channel", configured for a controlled release of fluid, in particular gas, from the pressurized space. A valve is preferably provided for controlling the fluid release. The release of fluid from the outlet channel is preferably controllable in terms of the starting point, end point of fluid release, the endurance, volumetric flow rate exiting the pressurized space, the flow velocity, and/or the internal pressure in the pressurized space, any of which may follow a predetermined curve or gradient. The gas counterpressure in the pressurized space may thus be reduced over a period of time, such as to allow for the formation of sufficient gas cells and/or solidification of the foamable material to achieve the desired low density.

Control of the release of fluid from the pressurized space is preferably achieved using one or more variable valves at or downstream of the outlet channel. Pressure control valves have been found especially suitable for this purpose. The valve used to control the release of fluid from the pressurized space preferably has a rapid reaction time of no more than 20 ms, more preferably no more than 10 ms.

In a preferred embodiment of the invention, the molding unit is provided with an overflow channel, the overflow channel preferably being configured to allow the safe release of excess fluid, in particular excess gas, from the mold cavity. Preferably, the overflow channel has a diameter between 0.1 - 0.5 mm, more preferably between 0.15 - 0.3 mm, even more preferably around 0.2 mm. At such low channel diameters, gas could be released from the mold cavity without unwanted leakage of the foamable material.

In a further preferred embodiment of the invention, the injection molding unit comprises an extruder, preferably a rotating screw extruder, the extruder comprising:
- at least one inlet for a solid material,
- at least one heater, and
- at least one inlet for a fluid, in particular a blowing agent, preferably a supercritical fluid.

The extruder may melt the solid material, which is preferably a polymer or a precursor thereof, using the heater. Molten material may be displaced towards an inlet channel of the molding unit using the extruder and optionally any pumps. Preferably a rotating screw within the extruder displaces the molten material. An inlet preferably introduces a supercritical fluid and/or blowing agent into the extruder such as to dissolve the supercritical fluid and/or blowing agent in the molten material. A rotating screw extruder was found especially advantageous for dissolving the introduced fluid or blowing agent and providing a homogeneous mixture. This set-up in combination with the molding unit and pressurized container allowed for the formation of microcells in the foam due to the thermodynamic instability of the dissolved supercritical fluid and/or blowing agent upon reduction of the pressure in the mold. As such, principles of the microcell injection molding technique of US5866053A could be combined with the gas counter pressure procedure to optimize the mechanical and optical qualities of directly injection-molded shoe soles.

In a preferred embodiment of the invention, the blowing agent is selected from the group comprising chemical blowing agents, physical blowing agents and a combination thereof. It is especially preferred that at least one physical blowing agent is used, said physical blowing agent preferably comprising a compressed inert gas or volatile fluid such as N₂, CO₂, hydrocarbons, ketones and alcohols. Preferably, a compressed inert gas is used, said compressed gas being provided in a supercritical state. This preferably means that the pressure and temperature of the compressed gas are above its critical point, where distinct liquid and gas phases do not exist. The supercritical fluid is preferably N₂ or CO₂. Such fluids are highly miscible in a molten polymer (or precursor material) and are thermodynamically unstable, such that a pressure drop can cause the fluids to return to a gaseous state, forming bubbles. The high miscibility combined with the thermodynamic instability causes the formed bubbles to be well-distributed and small in size.

In a preferred embodiment of the invention, the supercritical fluid is provided by one or more pressurized chambers comprising a compressed gas. The pressurized chamber(s) are preferably fluidly connected to an inlet of the extruder. A valve may be provided to control the flow of compressed gas to the extruder. It is preferable that the pressurized chambers, the fluid connection, the inlet to the extruder and any valve be configured to withstand pressures of at least 50 bar, preferably at least 100 bar, more preferably at least 200 bar. At these pressures, gases could be brought to a supercritical state and the second internal pressure could be achieved in the foamable material, such as to create a positive pressure difference between the foamable material and the mold cavity.

In a further preferred embodiment of the invention, the injection molding unit further comprises a polymer injection unit, preferably comprising a rotating screw and a mixing chamber, wherein the rotating screw is preferably configured to compound the foamable material with a fluid, in particular a supercritical fluid and/or blowing agent, in the mixing chamber, said mixing chamber comprising: at least one inlet for a liquid and/or solid material and at least one inlet for a supercritical fluid and / or blowing agent. The dedicated mixing chamber allows for the residence time of both the liquid and solid material to be increased, before the mixture is displaced into the molding unit by the rotating screw. Improved mixing between the foamable material and the fluid, in particular a supercritical fluid and/or blowing agent is achieved. The inventive system is thus suited to both extrusion-based and polymer-compounding based materials.

In a further preferred embodiment of the invention, the injection molding unit comprises an inlet channel for the introduction of a supercritical fluid. The inlet channel preferably comprises one or more sensors for monitoring the pressure and/or volumetric flow rate of the supercritical fluid delivered to the foamable material. Preferably, a temperature sensor and two separate pressure sensors are used for this purpose. On the basis of data from these sensors and the known temperature-pressure characteristics of the supercritical fluid, the pressure drop and therefore the mass or volumetric flow rate of the supercritical fluid may be calculated. This allows for precise monitoring and adjustment of the composition of the foamable material.

In a further preferred embodiment of the invention, the injection molding unit is provided with at least one non-return valve, said non-return valve preferably being provided upstream of an injection nozzle, more preferably being provided upstream of an inlet for a compressed gas or supercritical fluid. The non-return valve advantageously prevents reversal of the flow direction of the foamable material in response to surges in the internal pressure of the mold cavity and/or in response to the introduction of a fluid at high pressure. It is especially preferable that the injection molding unit comprise at least two non-return valves: a front non-return valve provided immediately upstream of the injection nozzle and a back non-return valve provided upstream of an inlet for a supercritical fluid or compressed gas. The back non-return valve can ensure that gas introduced at high pressure into a material melt does not force the molten material upstream. Instead, the high pressure aids in solution of the gas into the molten material and raises the pressure of the foamable material to the second pressure, which is greater than then the first internal pressure in the mold cavity.

In a further preferred embodiment of the invention, the injection molding unit comprises a valve gate nozzle. The valve gate nozzle preferably comprises a pin for closing off the flow of foamable material to the mold cavity at the end of the injection phase of an injection molding cycle. This reduces the shear forces acting on the foamable material and provides improved optical results in the injection molded sole as the valve can be reliably sealed at the end of the injection phase. Stringing or witness marks on the sole can be reduced and/or avoided.

In a further preferred embodiment of the invention, the valve gate nozzle preferably has an exit diameter not greater than 25 mm, more preferably not greater than 15 mm, more preferably not greater than 10 mm. It is also preferred that the valve gate nozzle have an exit diameter of at least 1 mm, more preferably at least 3 mm, even more preferably at least 6 mm. A too large exit diameter may reduce the aesthetic finish of the sole and may be difficult to hide or disguise visually. On the other hand, exit diameters which are too narrow cause excessive shearing of the foamable mixture, which can deform the bubbles produced and can disturb the foam structure. An exit diameter of around 8 mm has been found especially suitable.

As a mere example, a Milacron F220 injection molding unit may be used as part of the inventive system.

In a further aspect, the invention relates to a direct injection method for manufacturing a shoe sole or part thereof comprising a foamed material, the method comprising:
- providing a mold and an upper closing element, thereby forming a molding unit, configured to form a cavity in the shape of a shoe sole or part thereof,
- creating a pressurized space around said molding unit by positioning a pressurized container above or around the molding unit or positioning the molding unit inside the pressurized container,
- supplying a gas to the pressurized space to reach a first internal pressure of at least 5 bar, preferably at least 10 bar, more preferably at least 75 bar,
- injecting a foamable material into the cavity at a second pressure by means of an injection molding unit, wherein the second pressure is greater than the first internal pressure.

By supplying a gas to the pressurized space before injecting the foamable material into the cavity, the internal pressure of the pressurized space may be raised above ambient pressure to a higher pressure greater than 5 bar. A pressure difference between the foamable material being injected and the cavity may be reduced, thus avoiding the abrupt and steep pressure drop of the prior art. A gas counterpressure injection molding process may thus be carried out whilst at the same time directly soling a shoe upper.

The gas counterpressure provided by raising the first internal pressure in the cavity improves the foaming behaviour of the material being injected into the cavity. Surprisingly, the improved foaming has been found to allow injection molding of the sole from a variety of materials, including biologically based polymers, as will be explained further herein.

The mechanical properties of the sole, including its density, are significantly dependent on the amount and concentration of a blowing agent, in particular a supercritical fluid, which can be bound within a mixture containing a polymer melt (or a precursor thereof) at the point of injection. At low viscosities of the polymer melt (or molten precursor), low amounts of blowing agent can be mixed into the foamable material. Molten materials with higher viscosities can however hold larger amounts of blowing agent which may be well-mixed therein.

The inventors are credited with discovering that the viscosity of a molten foamable material may be raised without detriment to the density of the final product by applying a gas counterpressure. This slows the flow of the foamable material and increases its resistance to shear forces. The increased viscosity allows the amount of blowing agent mixed and dissolved into the molten foamable material to be significantly increased, which reduces the density of the injection molded sole. The increased viscosity also lends itself to the addition of further chemical blowing agents and inert nucleating agents such as particles and fibers. However, the high capacity of the foamable material to be loaded with physical blowing agent, in particular a supercritical fluid, reduces the need for such chemical blowing agents and/or inert nucleating agents. This improves the composition of the product and its mechanical properties.

Raising the pressure of the foamable material to a second pressure, higher than the first internal pressure, not only drives the foamable material into the mold cavity but also increases the solubility of any additives dissolved therein, in particular blowing agents. A uniform material can thus be injected, resulting in a low-density product with the positive mechanical and aesthetic qualities set out above for the inventive system.

In a preferred embodiment of the invention, the second pressure at which the foamable material is injected is at least 6 bar, preferably at least 10 bar, more preferably at least 20 bar, more preferably at least 30 bar, more preferably at least 40 bar, more preferably at least 50 bar, more preferably at least 60 bar, even more preferably at least 75 bar. These second pressures allowed the molten foamable material to be sufficiently loaded with a blowing agent and to be driven into the mold cavity at a suitable velocity, such that cooling and solidification occur at an optimal point in the foaming process.

In a further preferred embodiment of the invention, the first internal pressure is at least 50 bar, while the second pressure is at least 100 bar. In a further preferred embodiment of the invention, the first internal pressure is at least 100 bar while the second pressure is at least 150 bar. At these pressures, excellent loading of the foamable material with blowing agent could be achieved and the produced soles or portions thereof had low density and excellent mechanical and aesthetic properties.

In a further preferred embodiment of the invention, the method further comprises, after injecting the foamable material into the cavity, releasing fluid, in particular gas from the pressurized space through at least one fluid outlet channel, wherein the release preferably occurs in a controlled manner. The gas release preferably reduces the counterpressure acting against the flow of the foamable material into the cavity. The gas release may begin during the injection of the foamable material into the mold cavity but preferably begins once the injection step has ended. Thus, foaming of the material preferably occurs with full counterpressure. The end of the injection step is preferably marked by closing the gate valve nozzle.

In a further preferred embodiment of the invention, the method comprises the steps of:
- Closing the molding unit by lowering of the upper closing element, which preferably carries a shoe upper,
- Start of counterpressure build-up by allowing entry of compressed gas into the pressurized container within which the molding unit is fixed,
- Completion of the counterpressure build-up by stopping the entry of further compressed gas into the pressurized container, in particular by closing a valve connecting the molding unit to a pressurization unit,
- Start of injection of a foamable material into the mold cavity,
- End of injection of the foamable material into the mold cavity in particular by closing a valve connecting an injection molding unit to the molding unit,
- Release of gas from the pressurized container around the molding unit, in particular by opening a valve connecting an outlet channel of the molding unit to an external space,
- Optionally actively cooling the molding unit and
- Unloading the molding unit from the (de-pressurized) pressurized container and demolding of the shoe sole or part thereof, in particular by opening the mold and raising the upper closing element.

These method steps will be explained in more detail with reference to the figures.

The foamable material preferably comprises a polymer or precursors thereof. The polymer type is preferably selected such as to have a limited crystallinity. The degree of crystallinity (D) of the selected polymer preferably does not exceed 80 % and even more preferably does not exceed 70 %. A sufficient degree of crystallinity was however desirable to form a sufficiently thick and/ strong skin around the sole or portion thereof and to provide the sole with sufficient hardness. The degree of crystallinity was thus preferably not less than 10 %, more preferably not less than 20 %. Polymers having the preferred crystallinities presented a more stable foaming behavior and a low density.

In a further preferred embodiment of the invention, the foamable material comprises thermoplastic elastomers, polyurethane, particularly thermoplastic polyurethane, polyvinyl chloride, polypropylene, polystyrene, polycarbonate, derivatives of polyamides, polyester, rubber, SBS, SEBS, polyolefins, Pebax, or a combination thereof, wherein Pebax is preferred. The foamable material may also comprise precursors such as monomers of the aforementioned materials and any catalysts required for their polymerization.

The invention surprisingly achieves microcellular foaming with a wide range of materials, providing low density, high strength, flexibility, elasticity and a good adhesion between the sole and shoe upper. Advantageously, the inventive method is compatible with non-traditional materials such as Pebax which could also be foamed to provide the desired aesthetic and mechanical quality. The use of Pebax is particularly advantageous as it is ultralight and highly elastic with low energy loss. This makes it especially suited to improving the performance of an athlete when wearing a shoe with a Pebax-based sole. Furthermore, the precursors of Pebax are sourced from castor beans, making Pebax an entirely renewable and biologically-based material. Its recyclability, which can be achieved without releasing the harmful gases associated with other materials, make it a highly sustainable solution. The discovery of the foamability of Pebax to form high-performance direct soles using the method of the present invention is highly relevant in the context of the drive to reduce and eliminate the use of non-sustainable materials such as polyurethane. With increasing regulation of the use of such materials, the provision of more sustainable alternatives will become even more important in the field of shoe manufacture.

In a further preferred embodiment of the invention, the foamable material comprises a passive nucleating agent, preferably selected from the group comprising a mineral filler such as talcum powder, kaolin, chalk, clay and a nanofiber such as halloysite and cellulose nanofibers. These may further increase the void fraction of the sole. Fibers may be included in the composition of the foamable material to provide a directionality in the flexibility of the sole or portion thereof. In other words, the sole may be made more flexible in a particular direction. As fibers tend to align with the direction of flowing material, the position and orientation of an inlet and/or nozzle for the injection of the foamable material may be selected accordingly.

In a further preferred embodiment of the invention, the foamable material comprises an endothermic blowing agent. The endothermic blowing agent is preferably provided in granulate form and preferably has an average diameter less than 1 mm, preferably less than 500 µm, more preferably less than 100 µm. Such a blowing agent accelerates the cooling of the foamed material in the mold cavity, reducing the cycle time.

In a further preferred embodiment of the invention, the foamable material comprises an inert gas dissolved therein, the inert gas acting as a blowing agent. Preferably, the concentration of inert gas in the foamable material at the point of injection is between 0.2 - 4 w/w %, more preferably 0.5 - 2 w/w %. The optimal concentration of inert gas depends on the type of polymer used, the type of inert gas and the solubility of the inert gas in the polymer. A high concentration of dissolved gas is generally preferred such as to increase the void space and improve the distribution of cells across the whole foam. The concentration of the dissolved gas is however preferably low enough that the average cell diameter in the produced foam is not too high, preferably being lower than 50 µm, and the foam can solidify within 20 minutes, more preferably within 10 minutes.

In a further preferred embodiment of the invention, inner walls of the mold are provided with a release agent configured to reduce or prevent adhesion of the foamable material to the inner walls of the mold. The release agent is thus preferably selected depending on the composition and/or properties of the foamable material. This facilitates the release of the solidified sole or portion thereof from the mold without leaving residues. The release agent may be provided in the form of a permanent coating (such as Teflon) or a temporary coating applied at each production cycle or after a number of production cycles.

In a further preferred embodiment of the invention, the foamable material is supplied to the injection molding unit and the material is melted or mixed in the injection molding unit to form a foamable melt or foamable mixture, wherein optionally a nucleating agent and / or blowing agent is supplied to the foamable melt or foamable mixture. Mixing of the nucleating agent and/or blowing agent into the foamable material may occur before or after melting, depending on the technique used. It is however preferable that the foamable material be in a fluid state upon injection. That is, a solid material is preferably melted to form a continuous phase. Gaseous blowing agents and/or solid nucleating agents may be dispersed within the continuous phase.

In a further preferred embodiment of the invention, a supercritical fluid and / or blowing agent is supplied to the foamable mixture or melt in the injection molding unit to provide at least a two-phase mixture or melt, the method further comprising dissolving the supercritical fluid and / or blowing agent in the foamable melt or mixture to form a single-phase foamable material. The single-phase foamable material comprising a dissolved supercritical fluid and/or blowing agent is especially suited to the formation of a low density foamed sole due to the formation of microcells when the foamable mixture is injected into the mold cavity.

In a further preferred embodiment of the invention, the foamable material is preferably injected into the mold cavity at an average flow velocity of at least 150 mm/s, more preferably at least 200 mm/s, even more preferably at least 250 mm/s. At these flow velocities, adequate material properties could be achieved without optical defects such as flow lines.

In a further preferred embodiment of the invention, the pressure with which a supercritical fluid is fed to an extruder or mixing chamber, the composition of the foamable material, its temperature upon injection, the mold temperature, the first internal pressure and/or the second pressure of the foamable material are adjusted to achieve a density less than 50 g/cm², more preferably less than 40 g/cm², more preferably less than 30 g/cm² and even more preferably less than 25 g/cm² in the injection molded sole or portion thereof. This is especially preferred where the foamed material comprises polyurethane or Pebax. These densities are especially advantageous for providing comfort and high performance in shoes. It is within the skill of the person skilled in the art to fine-tune the above parameters using the principles of the invention to obtain the required final density.

In a further preferred embodiment of the invention, the pressure with which a supercritical fluid is fed to an extruder or mixing chamber, the composition of the foamable material, its temperature upon injection, the mold temperature, the first internal pressure and/or the second pressure of the foamable material are adjusted to achieve an average cell diameter not greater than 50 µm, preferably not greater than 40 µm, more preferably not greater than 30 µm, more preferably not greater than 20 µm, even more preferably not greater than 10 µm. Such cell diameters provide a strong, low-density foam with a soft aesthetic finish.

Terms such as substantially, approximately, essentially, about, etc. preferably describe a tolerance range of less than ± 20%, preferably less than ± 10%, especially preferably less than ± 5%, and especially less than ± 1%, and include the exact value.

### DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the method and apparatus within the scope of these claims and their equivalents be covered thereby. All embodiments relating to the inventive system and the inventive method are intended to be disclosed in the context of each other, such that features of the system may be considered as embodiments of the method, and vice versa.

Without intending to be limiting, the invention will be explained in more detail with reference to exemplary embodiments and the following figures:

### Brief description of the figures

**Figure 1****:** Schematic illustration of a plan view of a mold according to a first embodiment of the inventive system, the mold comprising two lateral frames connected by locking elements.
**Figure 2****:** Schematic illustration of a cross-section of a second embodiment of the inventive system, comprising a mold, upper closing element and ceiling element.
**Figure 3****:** Drawing a cross-section of a vent and overflow channel provided for the release of gas from the mold cavity according to a third embodiment of the inventive system.
**Figure 4****:** Drawing of an O-ring sealing element for the inlet and outlet channels of the molding unit according to a fourth embodiment of the inventive system.
**Figure 5****:** Graph showing the variation of pressure within the mold cavity over time in a first embodiment of the inventive method.
**Figure 6****:** Schematic illustration of a sequence of steps and their duration in seconds according to a second embodiment of the inventive method.
**Figure 7****:** Photograph of a ceiling element comprising an overflow channel according to a fifth embodiment of the inventive system.
**Figure 8****:** Photograph of an upper closing element held within the ceiling element of Figure 7, without a shoe upper being carried thereon.
**Figure 9****:** Photograph of a shoe upper with a directly injection molded sole produced using the inventive method.
**Figure 10****:** Photograph of the lower surface of the directly injection molded sole of Figure 9.
**Figure 11****:** Schematic illustration of a cross-section along the length of a further embodiment of the inventive system, in which a molding unit is placed within a pressurized container.
**Figure 12****:** Schematic illustration of a cross-section along the width of the molding unit of the system of Figure 11.
**Figure 13****:** Illustration of the thermodynamic conditions of an exemplary CO₂ blowing fluid used within a thermoplastic foamable material according to a further preferred embodiment of the invention.
**Figures 14A - 14N****:** Schematic illustrations of the steps of inserting and removing molding units sequentially from the same pressurized container using a pick-and-place robot according to a further preferred embodiment of the invention.
**Figures 15A - 15K****:** Schematic illustrations of the steps of inserting and removing molding units sequentially from the same pressurized container using a linear conveyor system according to a further preferred embodiment of the invention.
**Figures 16A - 16K****:** Schematic illustrations of the steps of inserting and removing molding units sequentially from a clamping table using a pick-and-place robot and enclosing the molding units with a bell-formed pressurized container according to a further preferred embodiment of the invention.

### Detailed description of the Figures

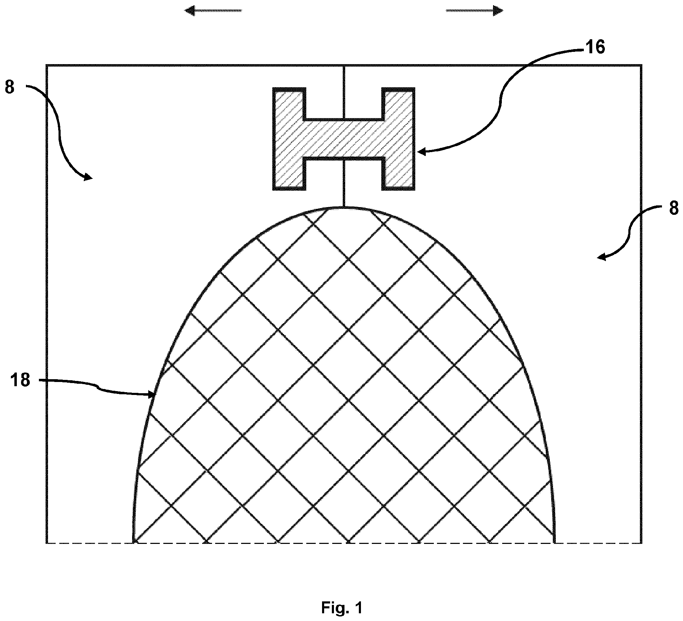

**Figure 1** illustrates schematically a plan view of a mold according to a first embodiment of the inventive system. The mold comprises two lateral frames 8, each lateral frame defining the form of a lateral side of a shoe sole **30** as well as a portion of its lower surface. The lateral frames **8** each comprise a recess, such that together they define inner walls of a cavity **18,** the cavity corresponding to the form of a sole **30.** The two lateral frames also comprise slots configured to receive a locking element **16,** which in this case has an l-shaped cross-section. The locking element **16** fixes the two lateral frames together, such that their recesses form a substantially continuous inner wall of the cavity **18.** The locking element additionally allows the lateral mold frames to withstand the high internal pressures of the cavity **18.** Although not shown, the lateral molds of this embodiment are also connected at their rear by a further locking element **16.**

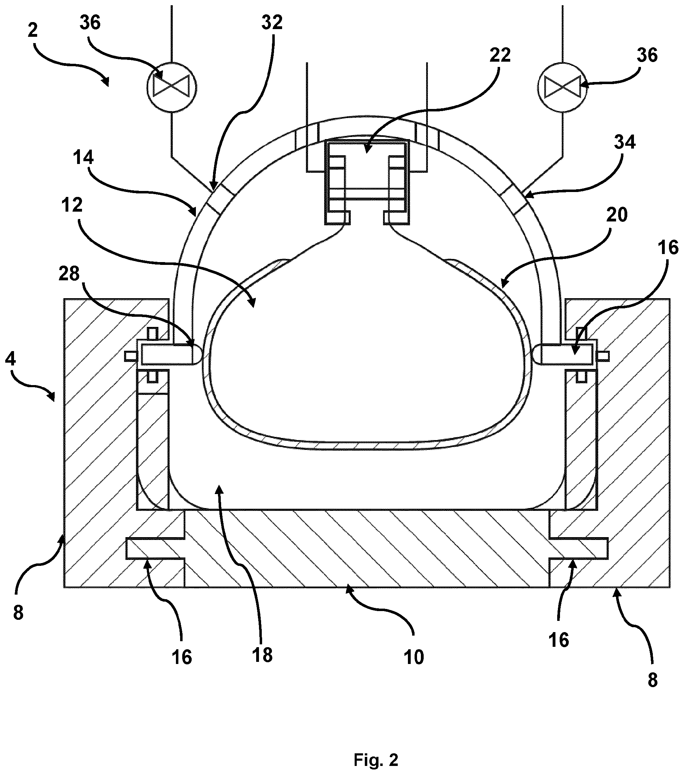

**Figure 2** illustrates schematically a cross-section of a second embodiment of the inventive system **2.** The system **2** comprises a molding unit **4,** which in turn comprises a pair of lateral mold frames **8,** a lower mold frame **10** and an upper closing element **12.** The mold frames **8** and **10** are provided with interlocking elements **16** such as to lock them in relative position and to allow them to withstand the high internal pressures within the cavity **18.**

The system **2** further comprises a pressurized container **14,** in this case in the form of a ceiling element domed over the upper closing element **12.** The ceiling element **14** comprises a socket **22,** which fixes the position of the upper closing element **12** with respect to said ceiling element **14** and improves the seal between a shoe upper **20** (not shown) carried on the upper closing element **12** and the lateral mold frames **8.** An additional sealing element **28** is provided on the lateral mold frames **8** to improve the seal between the shoe upper and the molding unit **4.** The ceiling element **14** is connected to the lateral mold frames **8** via an interlocking connection which is additionally provided with a sealing element **28,** in particular a rubber or silicone sealing band. The ceiling element **14,** the lateral mold frames **8** and the lower mold frame **10** thus define a pressurized space which includes the cavity **18.** The pressurized space can withstand the pressures over 5 bar gauge which are applied in the interior of the pressurized container **14.**

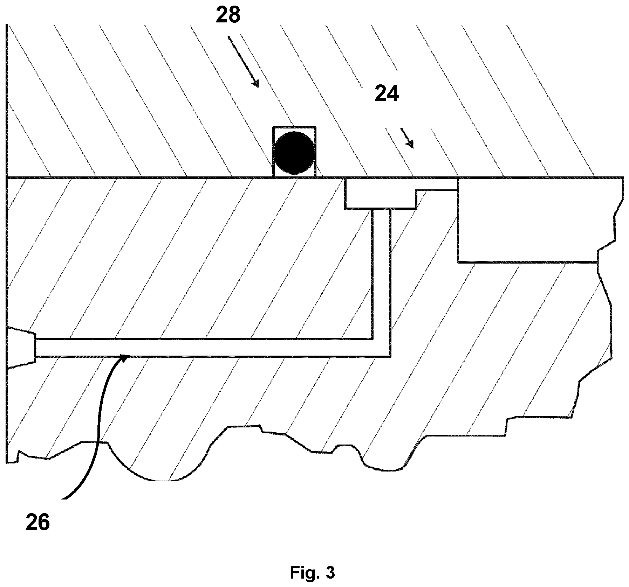

**Figure 3** shows a vent (or "outlet channel") **24** and an overflow channel **26** provided in the lateral mold frames **8** of a system according to a third embodiment of the inventive system. The overflow channel **26** has a diameter of 0.2 mm and allows excess gas to safely exit the pressurized space, without causing unwanted leakage of the foamable material.

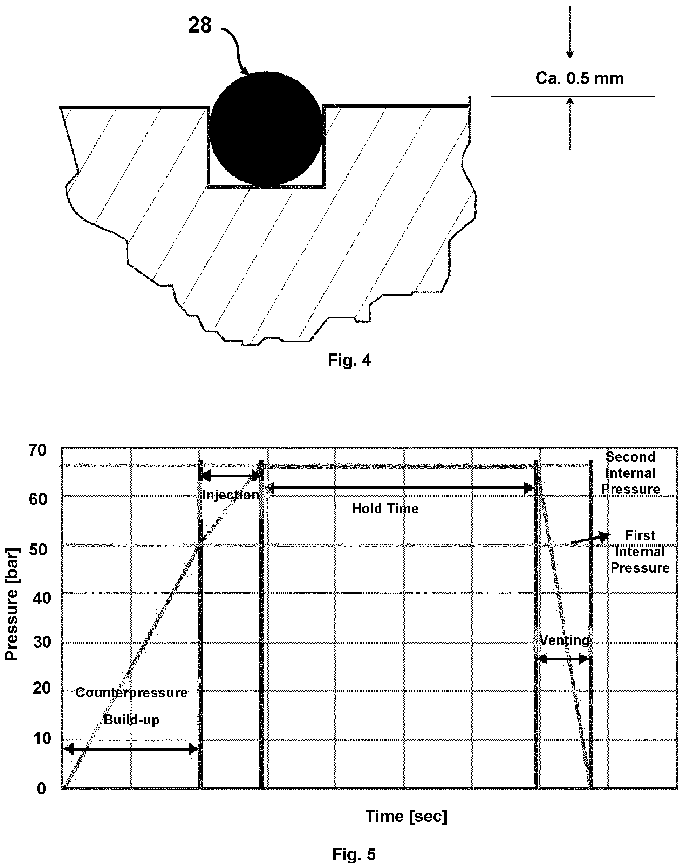

**Figure 4** shows an O-ring sealing element **28** used to seal inlets and outlets of the pressurized space, such as to prevent unwanted leakages and to provide a precise control of gas or foamable material introduced into the system **2** and released therefrom. Inlets and outlets of the system **2** thus withstand the high pressures.

**Figure 5** illustrates the variation of pressure within the mold cavity **18** over time in a first embodiment of the inventive method. The bold vertical lines separate the process into four main phases: counterpressure build-up, injection, hold time and venting. In the first phase, the internal pressure within the pressurized space is raised from ambient pressure to a first internal pressure of 50 bar (gauge). The first internal pressure is marked by horizontal line at the 50 bar mark. The foamable material, having a second pressure higher than the first internal pressure, is then injected into the mold. The foamable material experiences a small pressure drop (as its pressure within the nozzle is higher than in the cavity **18**) and nucleation begins. As the gas having the first internal pressure is not yet released from the pressurized space during injection, the pressure within the mold rises until it reaches the second internal pressure of ca 66 bar. This pressure is held for a period of time, during which cell formation and expansion of the foamable material occurs. Gas is then vented from the pressurized space, returning the pressure therein to ambient pressure, while the foamed material cools and solidifies.

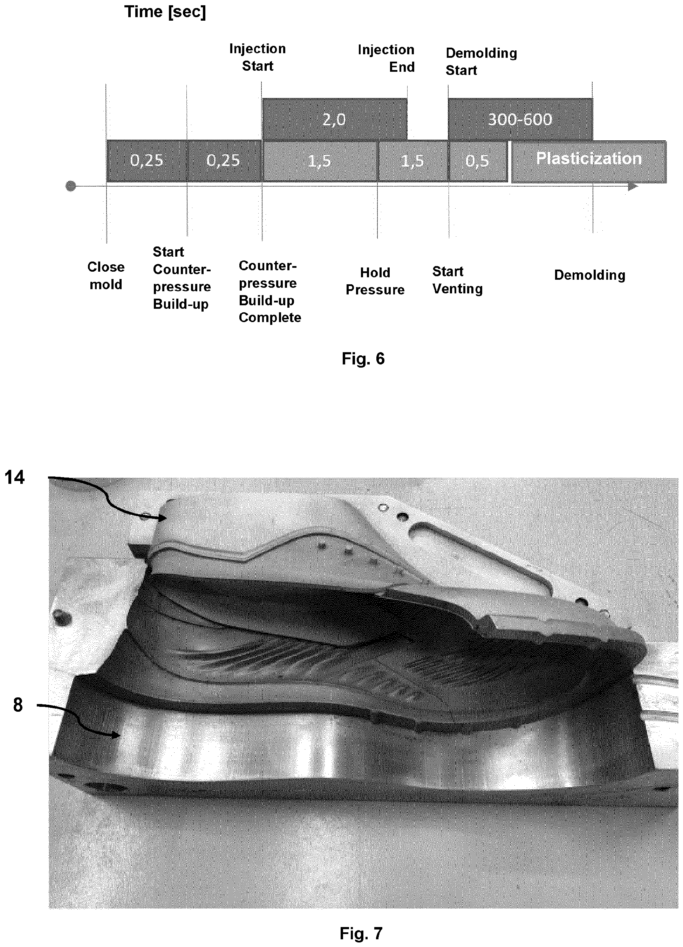

**Figure 6** illustrates a sequence of steps and their duration in seconds according to a second embodiment of the inventive method. As can be seen from the figure, the entire process cycle from closing the mold around a new shoe upper **20** to removing the shoe upper **20** having the directly injected molded sole **30** can be carried out in less than 11 minutes. The process cycle time is mainly limited by the plasticization step which occurs in parallel in the injection molding unit. The inventive method is thus very rapid and suited to mass production.

**Figure 7** is a photograph of a ceiling element **14** comprising an overflow channel **26** according to a fifth embodiment of the inventive system. The ceiling element **14** in this embodiment is shaped to complement the shape of a shoe upper **20** and to provide a tight fit therewith. Such a ceiling element **14** may be referred to as a "metal corset" for this reason. The ceiling element **14** is adjoined to a lateral mold frame **8** having a gas overflow channel **26** (not labelled).

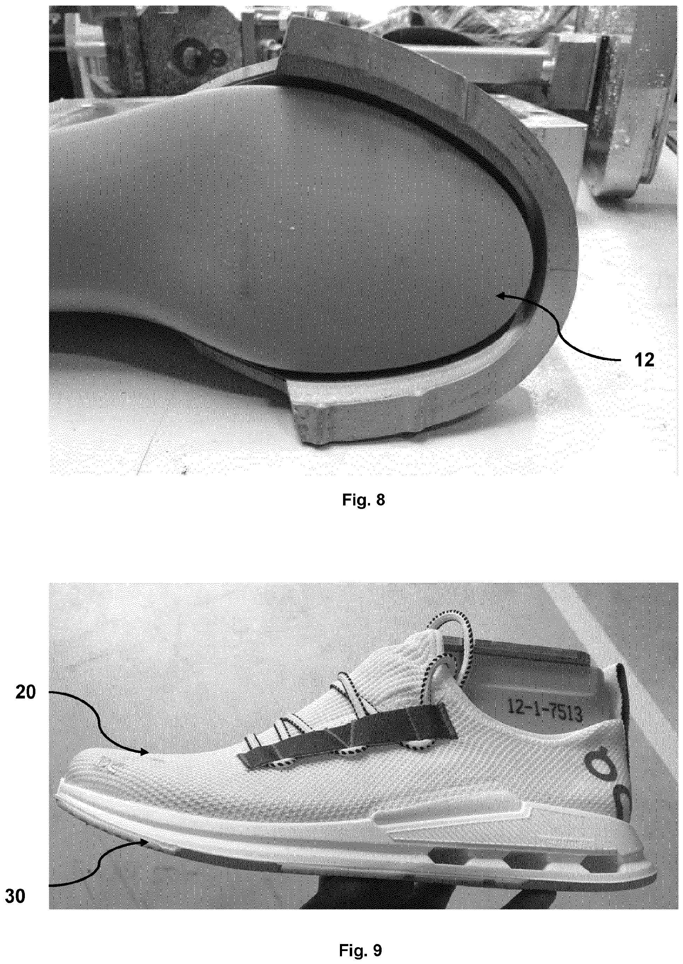

**Figure 8** is a photograph of the lower side of an upper closing element **12** fitted within the ceiling element **14** of **Figure 7****.** The upper closing element **12** corresponds to the form of a shoe last. A shoe upper **20** is provided on the upper closing element **12** which is inserted into the ceiling element **14** and fixed to lateral mold elements **8** in a manner similar to that shown in **Figure 2****.** The inventive method is then carried out to directly sole the shoe upper.

An exemplary result is shown in **Figure 9****.** The smooth, error-free aesthetic finish of the sole **30** is visible, as well as the clean connection between the sole **30** and the shoe upper **20.**

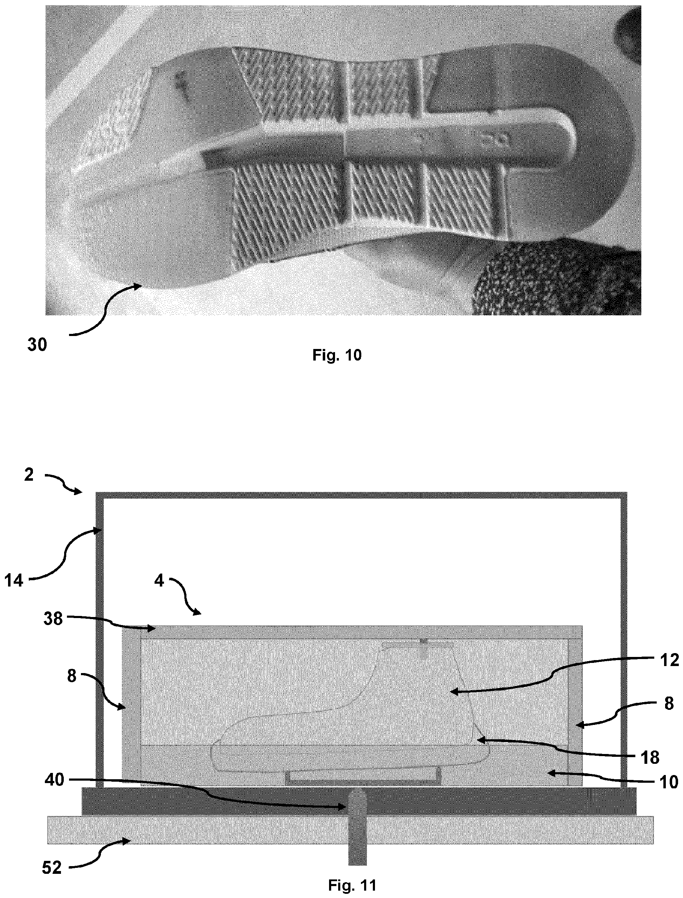

A lower surface of the sole **30** is visible in **Figure 10****.** A lack of silver marks and witness marks can be observed, indicating a high optical quality. The comfort and mechanical quality of the directly soled shoe were also found to be superior to the state of the art.

**Figure 11** shows a cross-sectional view of a system **2** according to a further preferred embodiment of the present invention. The system **2** comprises a molding unit **4,** which in turn comprises lateral mold frames **8,** a lower mold frame **10** and an intermediate ceiling element **38.** These mold frames and intermediate ceiling element provide a sole-shaped cavity **18.** The intermediate ceiling element **38** forms an upper outer wall of the molding unit **4** but not of the system **2.** The molding unit is further provided with upper closing element **12** in the form of a shoe last which is connected to the intermediate ceiling element **38** by means of a socket. The whole molding unit **4** is enclosed within a pressurized container **14.** The pressurized container **14** has such a volume that a gap is left between each of the lateral mold frames 8 and the intermediate ceiling element **38** and the inner walls of the pressurized container **14.** The molding unit **4** can thus be substantially surrounded by pressurized gas during injection molding. The system **2** is clamped onto a plate **52.** The sole-shaped cavity **18** of the molding unit **4** is connected to an injection molding unit **44** (not shown) by means of a foamable material inlet channel **40.** In this example, the foamable material inlet channel **40** traverses the plate **52,** the floor of the pressurized container **14** and the lower mold frame **10.** Preferably, the pressurized container **14** may be opened and closed to replace the molding unit **4** by separating the upper walls of the pressurized container **14** from its floor and/or from the plate **52.**

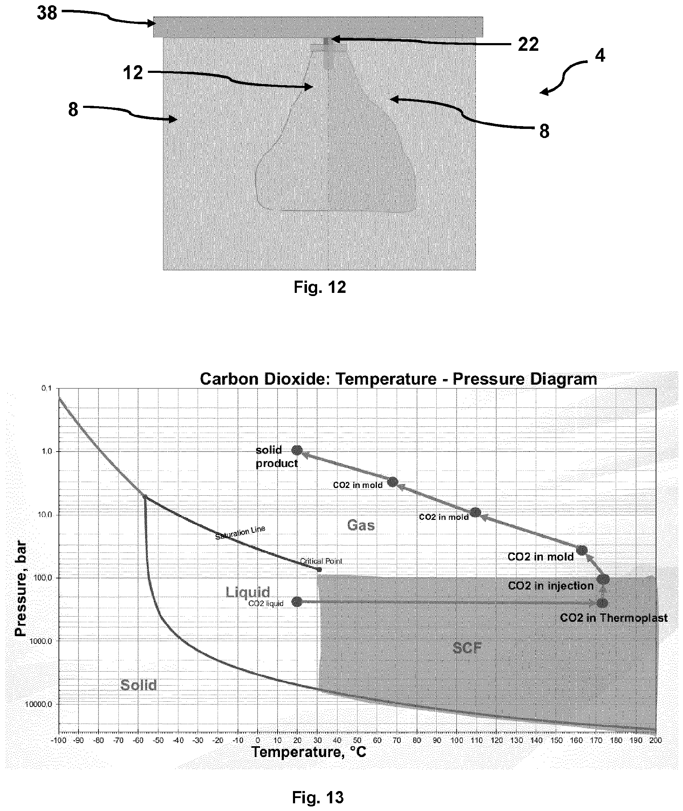

An orthogonal cross-section of the molding unit **4** is additionally provided in **Figure 12****.**

**Figure 13** illustrates the thermodynamic conditions of CO₂ used as a blowing fluid in a thermoplastic material according to a preferred embodiment of the invention. The graph shows the temperature-pressure-dependent properties of CO₂. As can be seen in the graph, the CO₂ can be classified as a solid, liquid or gas depending on its temperature and pressure conditions. At a critical point (ca. 31 °C and 74 bar), the CO₂ begins to behave as a supercritical fluid (SCF). At temperatures above 31 °C, the properties of CO₂ neither conform to those of a liquid nor to a gas. At this supercritical state, CO₂ has an especially low viscosity and high solubility in the foamable thermoplastic material.

The thermoplastic material is melted within or upstream of the injection molding unit. CO₂ is provided in a liquid state, e.g. in a pressurized vessel. The CO₂ is then heated past its critical point to bring it into a supercritical state before injecting it into the thermoplastic melt. Pressure within the injection molding unit is raised such as to bring the supercritical CO₂ into a gaseous state. This results in bubble formation. Within the mold, the pressure of the CO₂ increases while its temperature decreases. It thus remains in a gaseous state during cooling of the thermoplastic material to form a solid foam having a small and regular cell size.

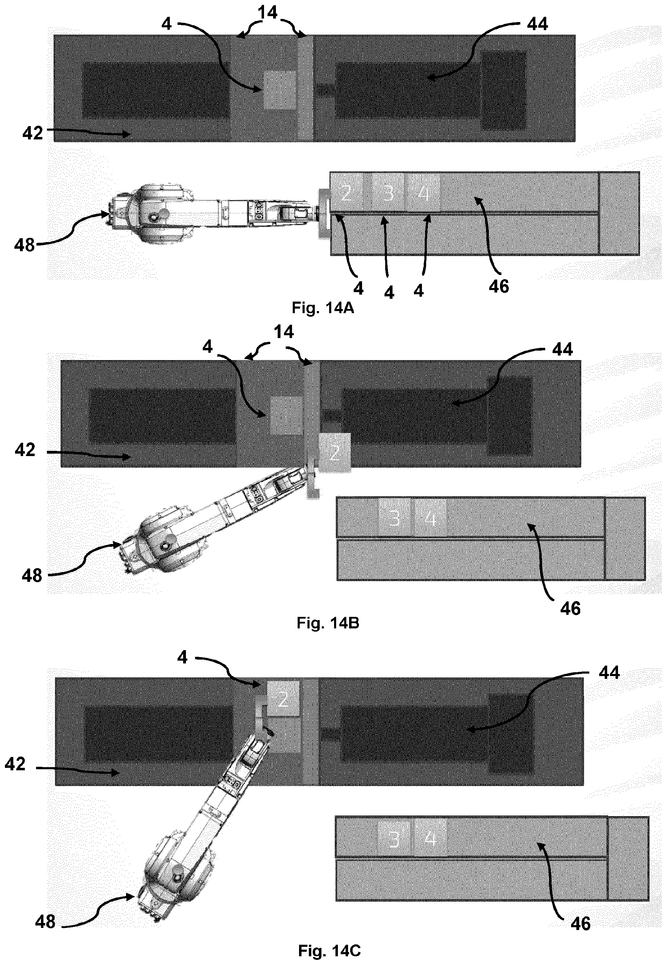

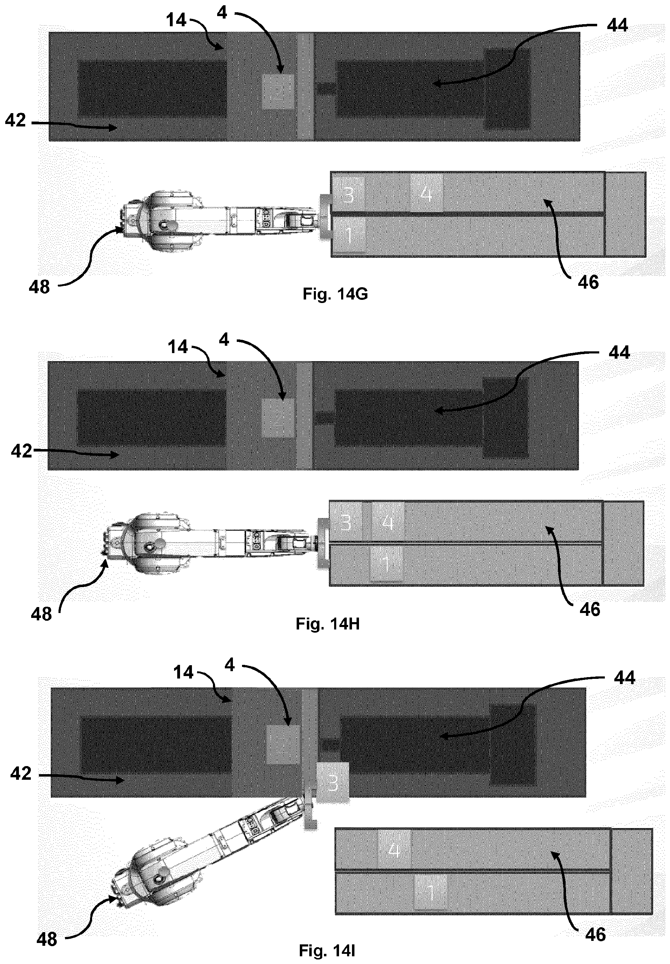

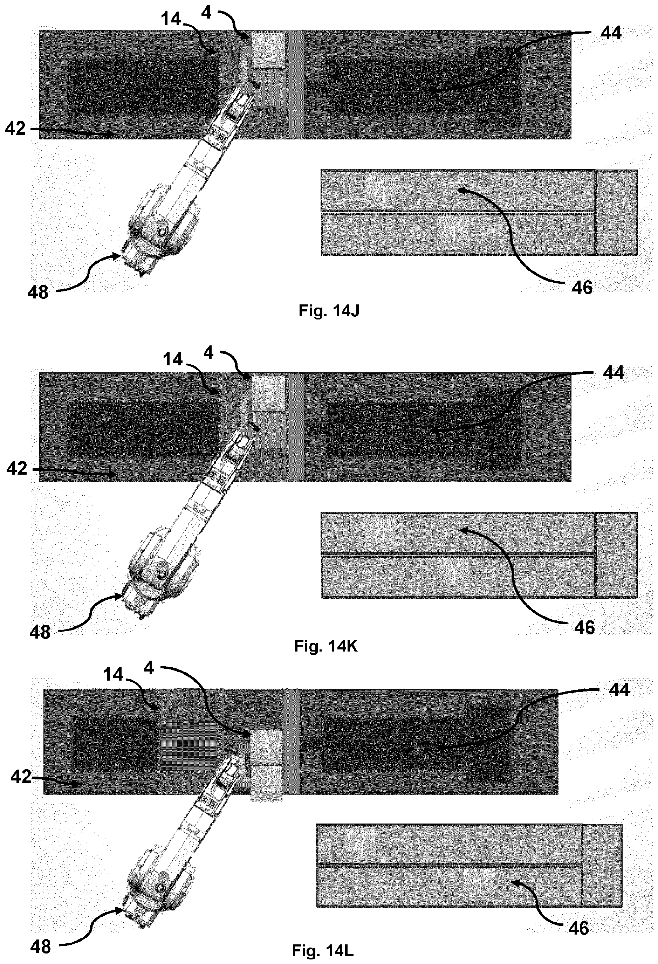

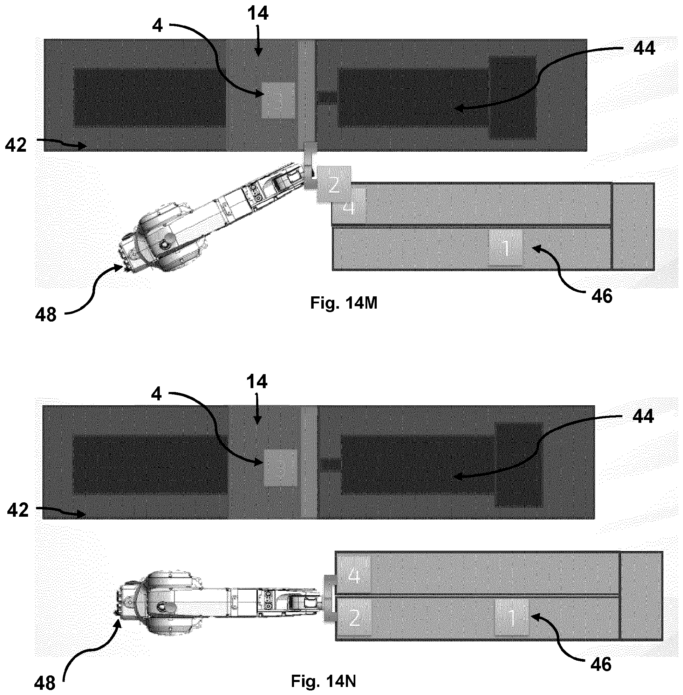

**Figures 14A** - **14N** schematically illustrate the steps of inserting and removing molding units **4** sequentially from the same pressurized container **14** using a pick-and-place robot **48** according to a further preferred embodiment of the invention.

Various molding units **4** are provided in sequence within a magazine **46.** **Figure 14A** shows the system during the injection molding of a foamable material from an injection molding unit **44** into the first molding unit **4.** During the injection molding step, the pressurized container **14** is fully closed around the molding unit **4.** A pick-and-place robot **48** selects the second molding unit **4** while the first molding unit **4** is connected to the injection molding unit **44.** The pick-and-place robot **48** then preferably brings the second molding unit **4** to a position above the pressurized container **14** as shown schematically in **Figures 14B - 14C****.**

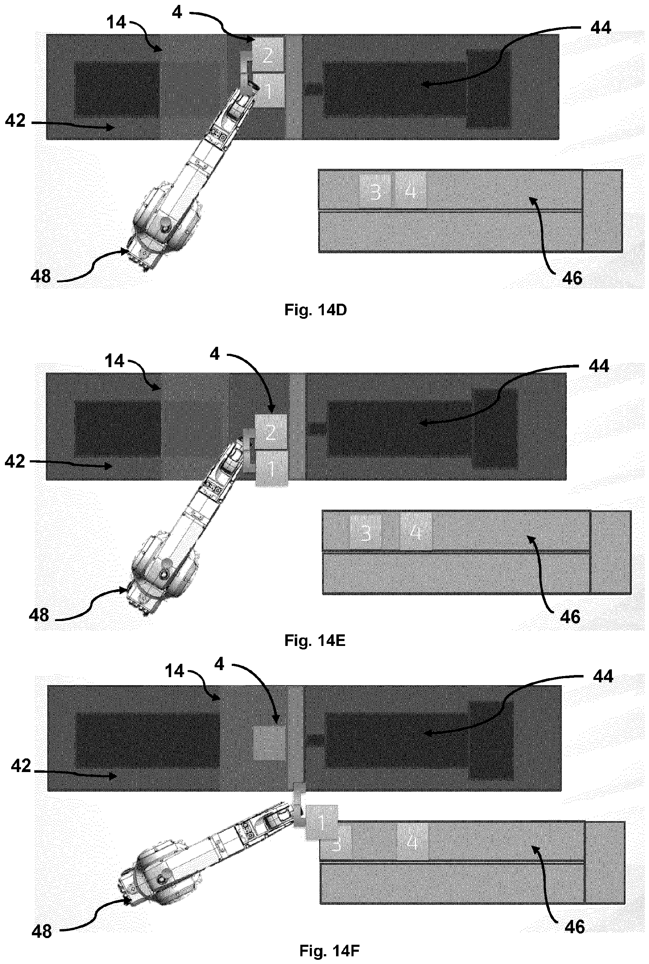

Once the injection step is complete and the pressurized container **14** has been safely depressurized, the pressurized container **14** is preferably opened. The pick-and-place robot **48** preferably engages with the first molding unit **4** such as to manipulate it using a gripping arm. The gripping arm thus holds both of the first and second molding units **4** as shown in **Figure 14D****.** The pick-and-place robot **48** then positions the second molding unit **4** such as to clamp it onto a floor of the pressurized container **14** or onto a clamping plate **52.** The second molding unit **4** is thereby fluidly connected to the injection molding unit by means of a foamable material inlet channel **40** (not shown). The pick-and-place robot **48** releases its grip on the second molding unit **4** whilst retaining its grip on the first molding unit **4.** This is shown in **Figure 14E****.**

The pressurized container **14** is then closed around the second molding unit **4** while the pick-and-place robot **48** brings the first molding unit **4** to a magazine. The first molding unit **4** may then be left to cool before being opened to release the foamed shoe sole or part thereof. At the same time, a new shoe sole or part thereof is formed within the second molding unit. This is shown schematically in **Figures 14F** and **14G****.**

This process is then repeated in an analogous manner as shown in **Figures 14H - 14N****.** The system may then be used to sequentially produce shoe soles or parts thereof in an efficient manner.

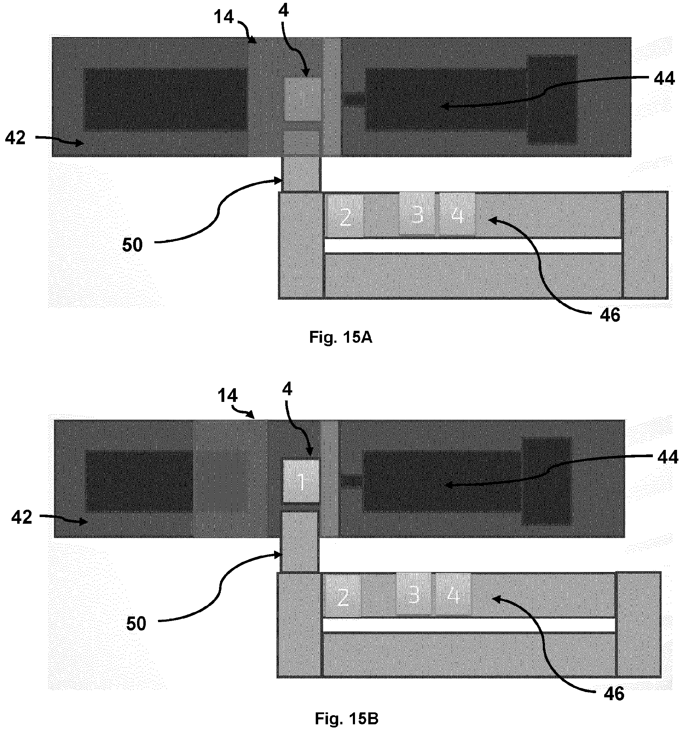

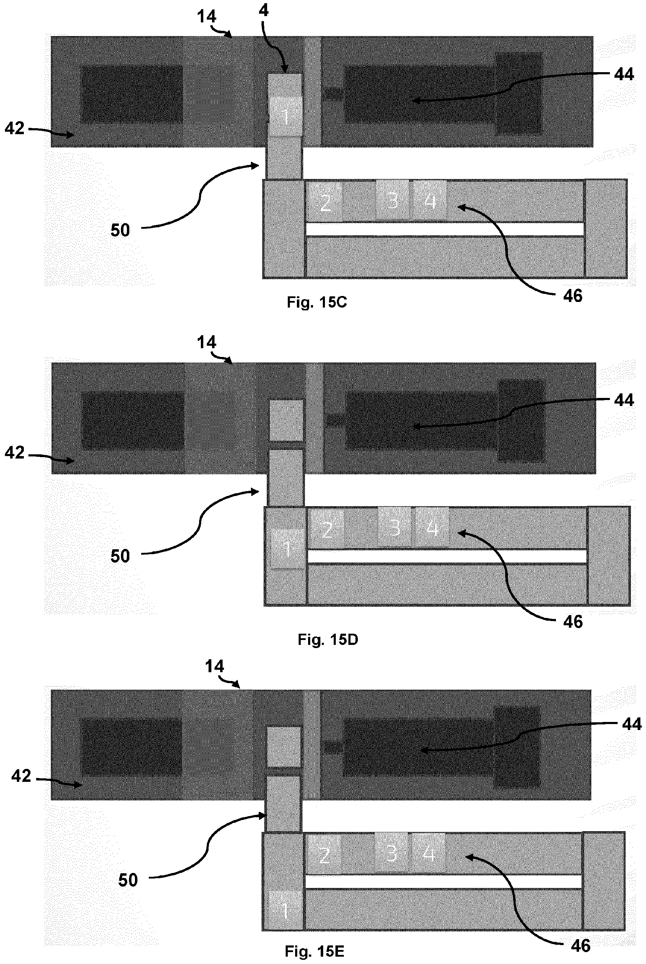

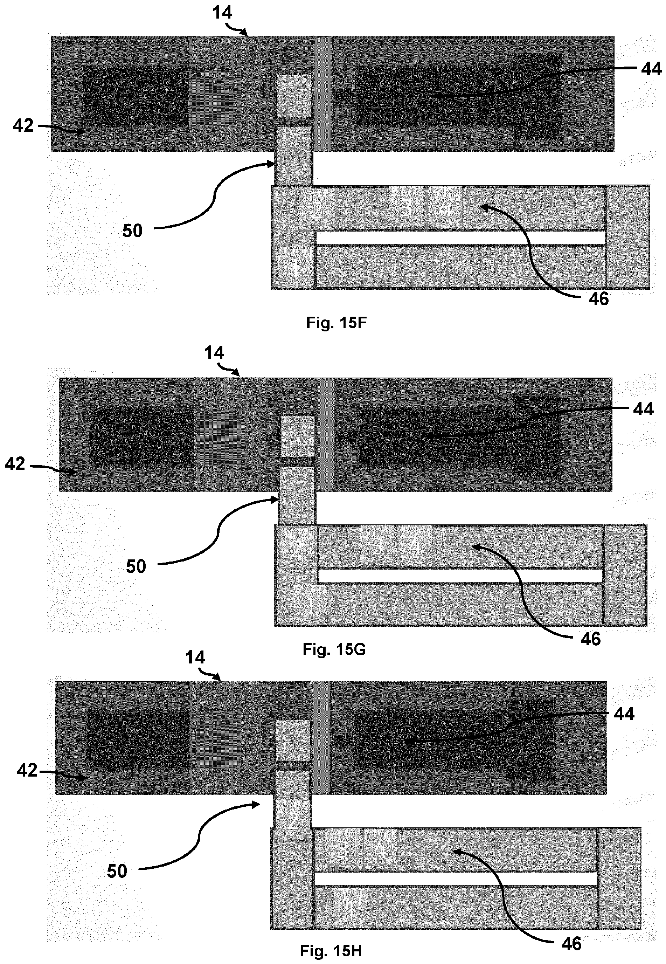

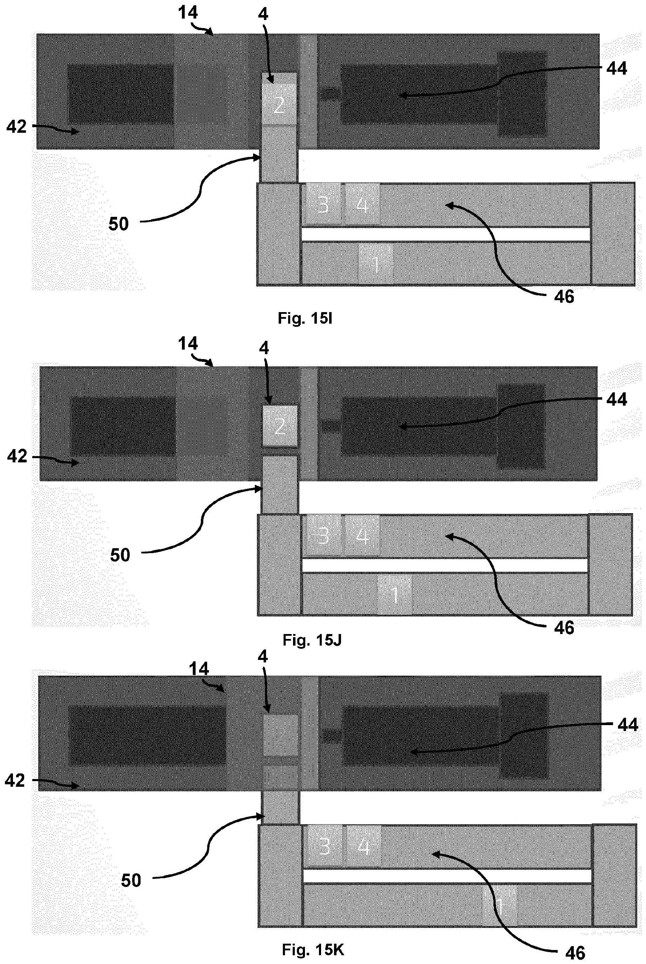

**Figures 15A - 15K** schematically illustrate the steps of inserting and removing molding units **4** sequentially from the same pressurized container **14** using a linear conveyor system **50** according to a further preferred embodiment of the invention. The linear conveyor system **50** comprises two linear conveyors. An input conveyor brings molding units **4** to a table **42** while an output conveyor removes molding units **4** from the table **42.** A pick-and-place robot **48** (not shown) transfers the fresh molding units from the conveyor system **50** to a position on the floor of the pressurized container **14** or a clamping plate **52.** The positioned molding unit is then fluidly connected to an injection molding unit **44.** This may occur by either bringing the floor of the pressurized container **14** or the clamping plate **52** towards the injection molding unit **44** or vice versa. The nozzle of the injection molding unit **44** may also be retractable for this purpose.

After injection molding and de-pressuring steps, a first molding unit **4** is released from its connection to the injection molding unit **44** and placed onto the conveyor system **50** to remove it. This is shown schematically in **Figures 15A - 15D****.** The conveyor system **50** then brings a second molding unit **4** onto the table **42** where it is positioned by a pick-and-place robot **48** and connected to the injection molding unit **44.** The pressurized container **14** is then closed around the molding unit **4** and a new pressurization and injection molding cycle begins. This is shown schematically in **Figures 15E - 15K****.** This process is repeated continuously.

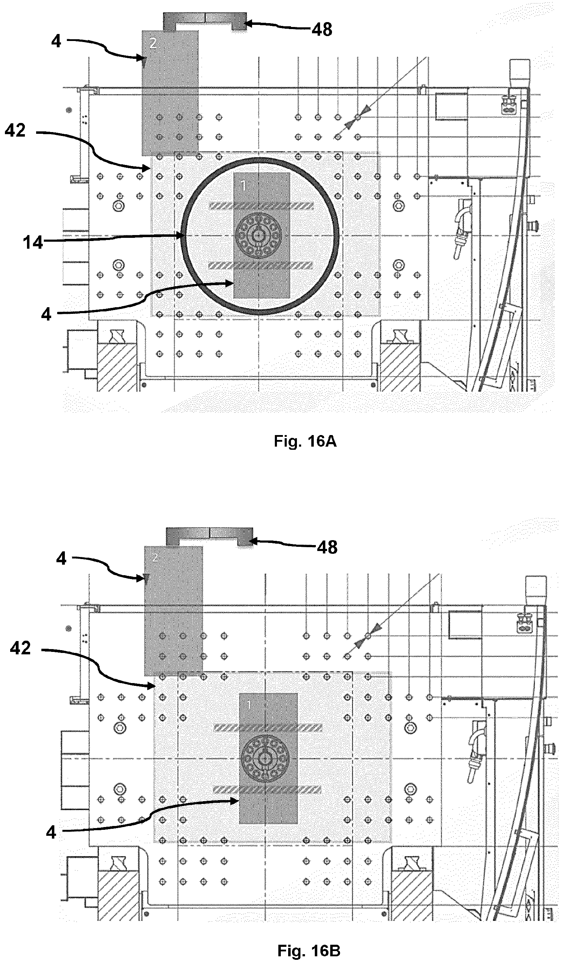

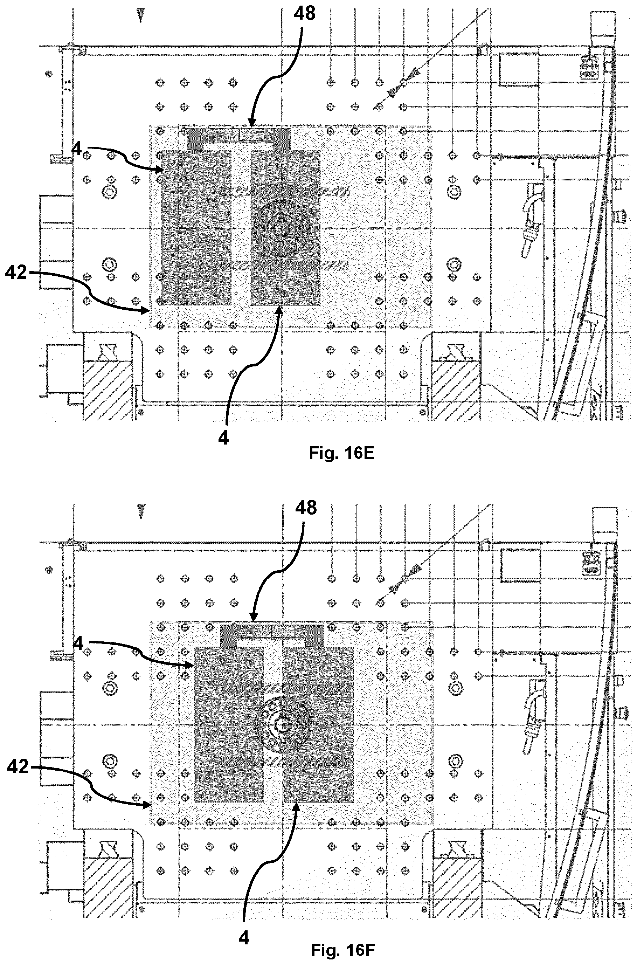

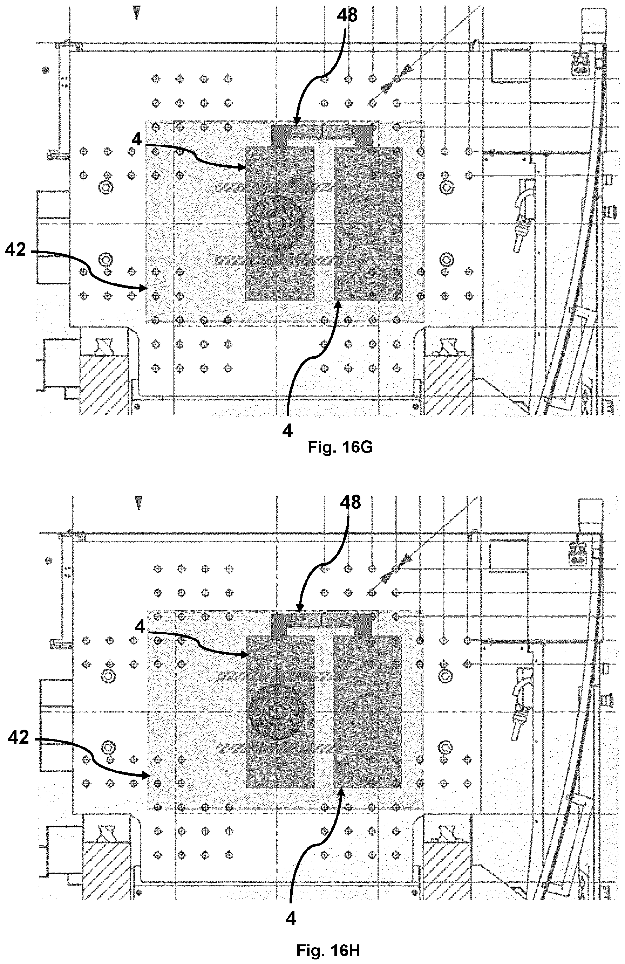

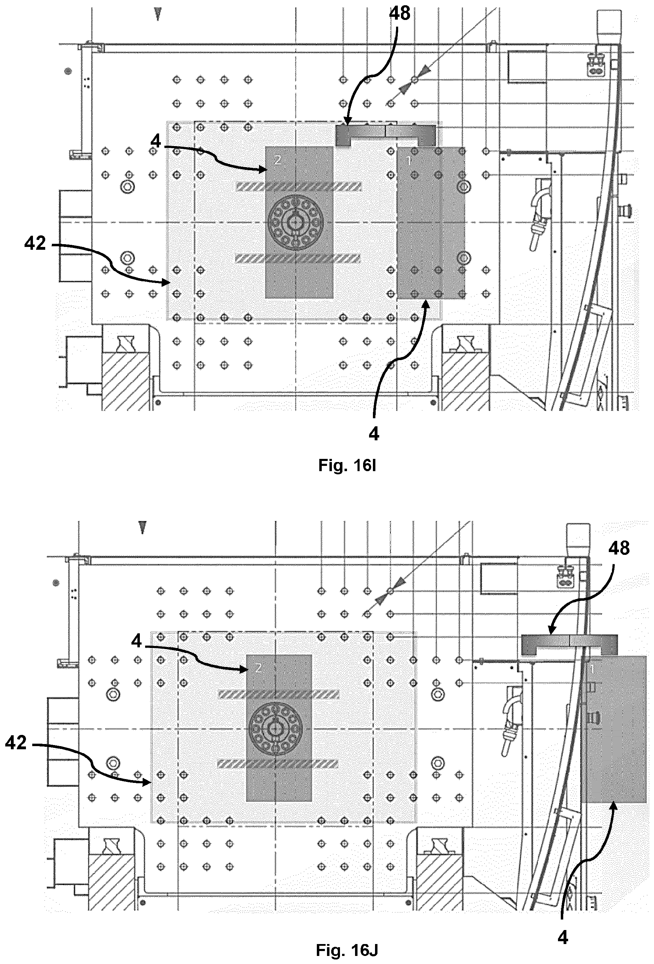

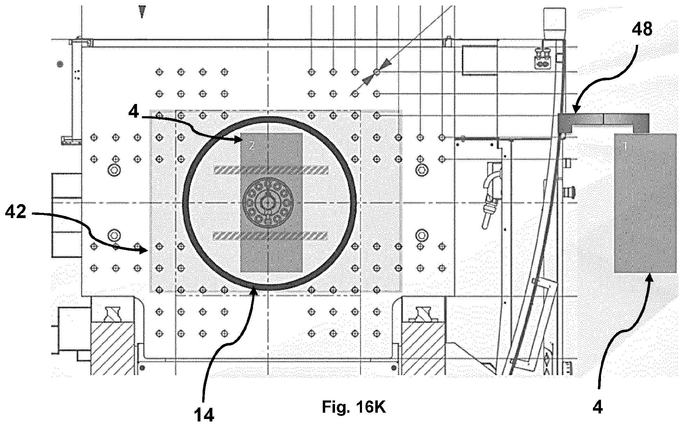

**Figures 16A - 16K** schematically illustrate the steps of inserting and removing molding units sequentially from a table **42** using a pick-and-place robot **48** and enclosing the molding units **4** with a bell-formed pressurized container **14** according to a further preferred embodiment of the invention. The pick-and-place robot **48** is symbolized by bracket form having two prongs on which molding units are held.

**Figure 16A** shows a pressurized container **14** closed around a first molding unit **4.** The pressurized container **14** has a circular footprint with a diameter sufficient to enclose the first molding unit **4,** which may contain two cavities **18** corresponding to a pair of soles. After foamable material has been injected into the cavities **18** of the first molding unit **4,** the pressurized container **14** is depressurized and lifted from the table **42.** The pick-and-place robot **48** holds a second molding unit **4** ready to replace the first molding unit **4.** This is shown schematically in **Figure 16B****.**

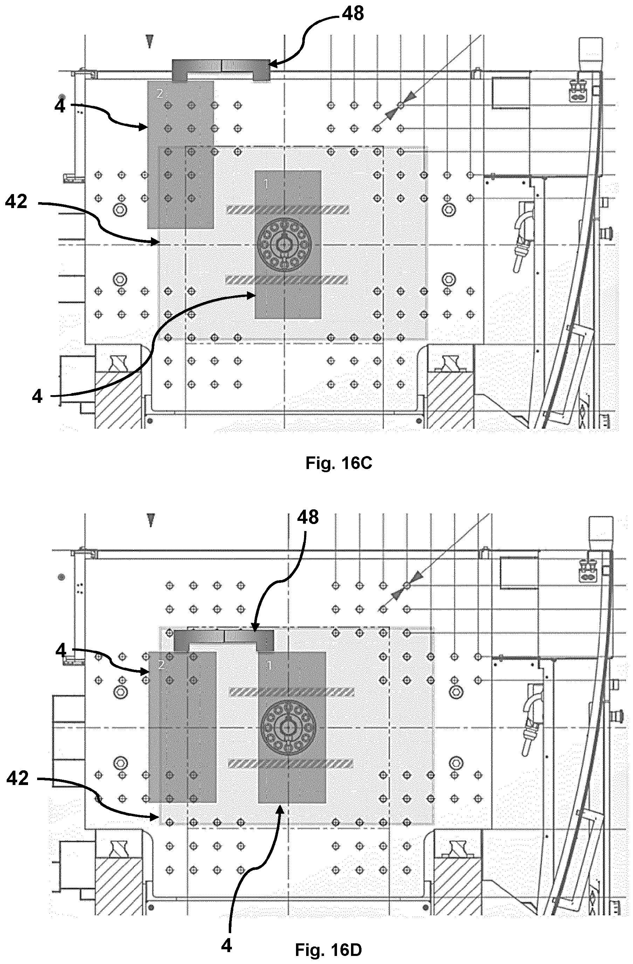

The arm of the pick-and-place robot **48** is brought towards the first molding unit **4** such as to engage and hold it, along with the second molding unit **4.** This is shown schematically in **Figures 16C** and **16D****.** The arm of the pick-and-place robot **48** is then moved to the right as shown in **Figures 16E** - **16H****.** The pick-and-place robot **48** positions and optionally clamps the second molding unit **4** onto the table **42.** Alternatively, the clamping may be carried out by a separate device. After the second molding unit **4** has been clamped into place, it is released by the pick-and-place robot **48.** This is shown in **Figure 16I****.** The pick-and-place robot **48** then removes the first molding unit **4** from table **42** by continuing to move rightwards. The pressurized container **14** is then placed over the second molding unit **4** and clamped into place. A new injection molding cycle proceeds.

In a further preferred embodiment of the invention (not illustrated), the replacement of a first molding unit **4** with a second molding unit **4,** preferably according to any of the aforementioned methods, takes no longer than 8 seconds. Closing of the pressurized container **14** preferably takes no longer than 1 second. The connection of the molding unit **4** and/or the pressurized container **14** to the injection molding unit **44** preferably does not take longer than 1 second. A pressure build-up within the pressurized container **14** preferably does not take longer than 1 - 2 seconds. Injection of the foamable material into the cavity **18** of the molding unit **4** preferably does not take longer than 4 seconds. Simultaneous cooling of the foamed material and depressurization of the pressurized container **14** preferably does not take longer than 4 seconds. Release of the molding unit 4 and/or the pressurized container **14** from the injection molding unit **44** preferably does not take longer than 1 second. Opening of the pressurized container **14** in preparation for another replacement of the molding unit **4** preferably does not take longer than 1 second. A process cycle time may thus be limited to 35 seconds, preferably 25 seconds, more preferably around 20 seconds.

### LIST OF REFERENCE SIGNS

- 2: System
- 4: Molding unit
- 8: Lateral mold frame
- 10: Lower mold frame
- 12: Upper Closing Element
- 14: Pressurized Container/ Ceiling Element
- 16: Locking Element/ Yoke
- 18: Cavity
- 20: Shoe Upper
- 22: Socket
- 24: Vent
- 26: Overflow Channel
- 28: Sealing Element
- 30: Sole
- 32: Gas/Fluid Inlet
- 34: Gas/Fluid Outlet
- 36: Valve
- 38: Intermediate Ceiling Element
- 40: Foamable Material Inlet Channel
- 42: Table
- 44: Injection Molding Unit
- 46: Mold Unit Magazine
- 48: Pick-and-place Robot
- 50: Conveyor System
- 52: Clamping Plate

## Claims

1. A system for manufacturing a shoe, a shoe sole or part thereof comprising a foamed material by direct injection, the system comprising:
- a mold and an upper closing element, thereby forming a molding unit, configured to form a cavity in the shape of a shoe sole or part thereof, and
- a pressurized container positioned above or around the molding unit to create a pressurized space around said molding unit, wherein said pressurized container is configured to withstand a first internal pressure of at least 5 bar.

2. The system according to claim 1, comprising additionally a pressurizing unit configured for supplying a fluid, in particular a gas, to the pressurized space to obtain said first internal pressure and an injection molding unit configured for injecting a foamable material at a second pressure into the cavity, wherein the second pressure is greater than the first pressure, and wherein
the foamable material at the second pressure is preferably loaded with a blowing fluid, in particular a supercritical fluid and/or a blowing agent.

3. The system according to any one of the preceding claims, wherein the mold comprises at least two lateral mold frames and preferably the mold or one or more of the at least two lateral mold frames further comprises a lower closing element.

4. The system according to any of one of the preceding claims, wherein the pressurized container is configured to create a pressurized space around one or more, preferably two or more molding units.

5. The system according to any of one of the preceding claims, wherein the system further comprises at least one foamable material inlet channel passing through the pressurized container and into the cavity of each molding unit in the pressurized container,
the at least one foamable material inlet channel preferably being provided with a valve for controlling the flow of foamable material from an injection molding unit to the cavity.

6. The system according to any of one of the preceding claims, wherein the pressurized container and/or the molding unit comprises means for positioning the upper closing element onto the mold, wherein the upper closing element is preferably a shoe last for carrying a shoe upper, preferably such as to withstand the first internal pressure and the second pressure without displacement of the upper closing element with respect to the mold.

7. The system according to any one of the preceding, wherein the pressurized container comprises a ceiling element above the molding unit, the ceiling element being attachable to the mold,
the ceiling element preferably comprising interlocking components selected from the group comprising: a lowering yoke, pawl and locking element.

8. The system according to any one of the preceding claims, wherein the pressurized container and mold are configured to withstand a first internal pressure of at least 10 bar, more preferably at least 75 bar.

9. The system according to any one of the preceding claims, wherein the system further comprises at least one fluid outlet channel configured for a controlled release of fluid from the pressurized space.

10. The system according to claim 2, wherein the injection molding unit further comprises an extruder, preferably a rotating screw extruder, the extruder comprising:
- at least one inlet for a solid material,
- at least one heater, and
- at least one inlet for a fluid, in particular a supercritical fluid and / or blowing agent.

11. The system according to claim 2, wherein the injection molding unit further comprises a polymer injection unit, preferably comprising a rotating screw and a mixing chamber, wherein the rotating screw is preferably configured to compound the foamable material with a fluid, in particular a supercritical fluid and/or blowing agent in the mixing chamber, said mixing chamber comprising:
- at least one inlet for a liquid and / or solid material,
at least one inlet for a fluid, in particular a supercritical fluid and / or blowing agent.

12. A direct injection method for manufacturing a shoe, a shoe sole or part thereof comprising a foamed material, the method comprising:
- providing a mold and an upper closing element, thereby forming a molding unit, configured to form a cavity in the shape of a shoe sole or part thereof,
- creating a pressurized space around said molding unit by positioning a pressurized container above or around the molding unit or positioning the molding unit inside the pressurized container,
- supplying a gas to the pressurized space to reach a first internal pressure of at least 5 bar, preferably at least 10 bar, more preferably at least 75 bar,
- injecting a foamable material into the cavity at a second pressure by means of an injection molding unit, wherein the second pressure is greater than the first internal pressure.

13. The method according to the preceding claim, wherein the second pressure at which the foamable material is injected is at least 5 bar, preferably at least 10 bar, more preferably at least 75 bar.

14. The method according to any one of claims 12 or 13, wherein the method further comprises, after injecting the foamable material into the cavity, releasing fluid, in particular gas, from the pressurized space through at least one fluid outlet channel, wherein the release preferably occurs in a controlled manner.

15. The method according to any one of claims 12 to 14, wherein the foamable material comprises thermoplastic elastomers, polyurethane, particularly thermoplastic polyurethane, polyvinyl chloride, polypropylene, polystyrene, polycarbonate, derivatives of polyamides, polyester, rubber, SBS, SEBS, polyolefins, Pebax, or a combination thereof, wherein Pebax is preferred.
